# EUROPEAN PATENT SPECIFICATION

(11) **EP 4 318 118 B1**
(45) Date of publication and mention of the grant of the patent: **02.12.2026**
(21) Application number: 22794582.1
(22) Date of filing: 12.04.2022
(51) Int. Cl.: G03B 5/02, G02B 7/08, G02B 27/64, G03B 30/00, H04N 23/54, H04N 23/55, H04N 23/68, H04N 23/57

(54) **CAMERA MODULE**
KAMERAMODUL
MODULE DE CAMÉRA

(30) Priority: 30.04.2021 CN 202110482664; 30.04.2021 CN 202110482636
(43) Date of publication of application: 07.02.2024
(73) Proprietor: NINGBO SUNNY OPOTECH CO., LTD, Yuyao, Zhejiang 315400 (CN)
(72) Inventor: ZHAO, Bojie, Zhejiang 315400 (CN); YE, Linmin, Zhejiang 315400 (CN); QUE, Jiayao, Zhejiang 315400 (CN); HUANG, Zhen, Zhejiang 315400 (CN); FANG, Yinli, Zhejiang 315400 (CN); HONG, Chao, Zhejiang 315400 (CN); FU, Qiang, Zhejiang 315400 (CN); YUAN, Dongli, Zhejiang 315400 (CN)
(74) Representative: Kluin Patent
(86) International application number: PCT/CN2022/086333
(87) International publication number: WO 2022/228111

(56) References cited:
- WO-A1-2015/001952
- CN-A- 101 067 709
- JP-A- 2000 307 937
- JP-A- 2011 227 427
- JP-A- 2011 227 427
- JP-A- 2020 170 088
- US-A1- 2010 171 392
- US-A1- 2016 161 828
- US-A1- 2017 017 058
- US-A1- 2017 257 544
- US-B2- 10 367 432

## Description

### Technical field

The present application relates to a camera module, and in particular, to a camera module which uses a new piezoelectric actuator as a driving element to meet the requirement of the camera module for optical image stabilization. Moreover, the piezoelectric actuator is arranged in the camera module in a rational arrangement scheme, so as to meet the structural and dimensional requirements of the camera module.

### Technical background

With the popularity of mobile electronic devices, the related technologies of camera modules for helping users obtain images (such as, videos or images) used in the mobile electronic devices have been developed and advanced rapidly, and in recent years, the camera modules have been widely applied in many fields such as medical treatment, security and industrial production.

In order to meet the increasingly widespread market demands, high pixels, large chips and small sizes are irreversible development trends of the existing camera modules. With the development of photosensitive chips in the direction of high pixels and large chips, the size of optical components (such as filter elements, and optical camera lenses) that are compatible with photosensitive chips is also gradually increasing, which brings new challenges to driving elements used to drive the optical components for optical performance adjustment (e.g., optical focus, optical image stabilization, etc.).

Specifically, existing driving elements for driving optical components are electromagnetic motors, such as Voice Coil Motors (VCM), Shape Memory Alloy Actuators (SMA), etc. However, as the size of optical components increases, resulting in an increase in weight, the existing electromagnetic motors are gradually unable to provide sufficient driving force to drive the optical components to move. Quantitatively, existing voice coil motors and shape memory alloy drivers are only suitable for driving an optical component with a weight less than 100 mg. That is, if the weight of the optical component exceeds 100 mg, the existing drivers will not be able to meet the application requirements of camera modules.

In addition, as mobile terminal devices are becoming smaller and thinner, the density of component layout inside the driving element has also increased. Correspondingly, the existing voice coil motor is internally provided with a coil and magnets. When the distance between two magnets is too close (less than 7 mm), their internal magnetic fields will interact with each other, resulting in displacement or vibration of the magnets, and reducing the stability of its drive control.

Therefore, an adapted new driving solution for camera modules is needed. The new driver can not only meet the driving requirements of the camera module for optical performance adjustment, but also meet the development requirements of lightness and thinness of the camera module.

US 2017/257544 A1 refers to an integrated substrate for anti-shake apparatus. US 2010/171392 A1 refers to a drive apparatus.

### Summary

The present disclosure provides a camera module according to claim 1. Some features of optional or preferred embodiments are recited in the dependent claims.

An advantage of the present application is to provide a camera module, wherein the camera module uses a new piezoelectric actuator as a driving element so that it can not only provide sufficient driving force, but also provide driving performance with higher accuracy and a longer stroke, so as to meet the demands of the camera module for optical performance adjustment, for example, the demands for optical image stabilization.

Another advantage of the present application is to provide a camera module, wherein the piezoelectric actuator has a relatively small size to better adapt to the development tendency of the camera modules for lightness and thinness.

Another advantage of the present application is to provide a camera module, wherein the piezoelectric actuator is arranged in the camera module in a rational arrangement scheme to meet the structure and size requirements of the camera module.

Through the following description, other advantages and features of the present application will become apparent, and can be realized by means and combinations particularly pointed out in the claims.

**In** order to achieve at least one of the advantages described above, the present application provides a camera module, comprising:
a photosensitive assembly, comprising a circuit board and a photosensitive chip electrically connected to the circuit board;
a lens assembly held on a photosensitive path of the photosensitive assembly, comprising a lens carrier and an optical camera lens mounted on the lens carrier, wherein the optical camera lens is provided with an optical axis; and
a driving assembly, comprising a first carrying frame, a first driving element and a first prepressing component, wherein the photosensitive assembly is mounted to the first carrying frame, and the first driving element is designed as a piezoelectric actuator, and wherein the first driving element is frictionally coupled to the first carrying frame through the first prepressing component, and is configured to, after being driven, move along a first direction in a two-dimensional trajectory in a plane perpendicular to the optical axis in a manner of bending vibration along two directions, and thereby drive the first carrying frame by friction, so as to bring the photosensitive assembly to move in the first direction in the plane perpendicular to the optical axis for optical image stabilization.

In the camera module according to the present application, the driving assembly further comprises a second carrying frame, a second driving element and a second prepressing component, wherein the second carrying frame is externally arranged on the first carrying frame, and the second driving element is designed as a piezoelectric actuator, and wherein the second driving element is frictionally coupled to the second carrying frame through the second prepressing component, and is configured to, after being driven, move along a second direction in a two-dimensional trajectory in a plane perpendicular to the optical axis in a manner of bending vibration along two directions, and thereby drive the second carrying frame by friction, so as to bring the first carrying frame to bring the photosensitive assembly to move in the second direction in the plane perpendicular to the optical axis for optical image stabilization, the first direction being perpendicular to the second direction.

In the camera module according to the present application, the piezoelectric actuator comprises an actuating system and a driving circuit system, wherein the actuating system moves in a two-dimensional trajectory along a preset direction in a manner of bending vibration along two directions under the control of the driving circuit system.

In the camera module according to the present application, the actuating system comprises a piezoelectric plate structure and a friction driving portion fixed to the piezoelectric plate structure, and the friction driving portion is frictionally coupled to the first carrying frame or the second carrying frame.

In the camera module according to the present application, the piezoelectric plate structure has a first side surface extending along its depth direction and a second side surface extending along its height direction and adjacent to the first side surface, wherein the piezoelectric plate structure has a first resonance frequency along its depth direction and a second resonance frequency along its height direction, and wherein the second resonance frequency is greater than the first resonance frequency.

In the camera module according to the present application, the piezoelectric plate structure comprises a first piezoelectric region, a second piezoelectric region and a third piezoelectric region formed on the second side surface, and a fourth piezoelectric region formed on the first side surface, wherein the second piezoelectric region is located between the first piezoelectric region and the third piezoelectric region, and the fourth piezoelectric region is adjacent to the second piezoelectric region; and wherein the piezoelectric plate structure further comprises a first electrode pair electrically connected to the first piezoelectric region, a second electrode pair electrically connected to the second piezoelectric region, a third electrode pair electrically connected to the third piezoelectric region, and a fourth electrode pair electrically connected to the fourth electrical connection region.

In the camera module according to the present application, the driving circuit system comprises a first driving circuit and a second driving circuit, the first driving circuit is electrically connected to the first electrode pair and the third electrode pair, and the second driving circuit is electrically connected to the second electrode pair and the fourth electrode pair; and wherein vibration frequencies of circuit vibration signals output by the first driving circuit and the second driving circuit are equal to the first resonance frequency or the second resonance frequency.

In the camera module according to the present application, when the vibration frequency of the circuit vibration signal output by the first driving circuit is the first resonance frequency, the piezoelectric plate structure resonates in its height direction and partially resonates in its depth direction, so that the piezoelectric plate structure moves in a two-dimensional trajectory along a preset direction in a manner of bending vibration along two directions; and wherein when a vibration frequency of a circuit vibration signal input by the second driving circuit is the second resonance frequency, the piezoelectric plate structure resonates in its depth direction and partially resonates in its height direction, so that the piezoelectric plate structure moves in a two-dimensional trajectory along a preset direction in a manner of bending vibration along two directions.

In the camera module according to the present application, the driving assembly further comprises a first friction actuating portion and a second friction actuating portion, and the first friction actuating portion is sandwiched between the first driving element and the first carrying frame, so that the first driving element is frictionally coupled to the first carrying frame through the first friction actuating portion and the first prepressing component; and the second friction actuating portion is sandwiched between the second driving element and the second carrying frame, so that the second driving element is frictionally coupled to the second carrying frame through the second prepressing component and the second friction actuating portion.

In the camera module according to the present application, the first driving element is located on a side part of the first carrying frame.

In the camera module according to the present application, the first driving element is located on an upper part of the first carrying frame.

In the camera module according to the present application, the first driving element is located on a lower part of the first carrying frame.

In the camera module according to the present application, the driving assembly further comprises an outer frame externally arranged on the second carrying frame, wherein the second driving element is sandwiched between the second carrying frame and the outer frame through the second prepressing component and the second friction actuating portion, so that the second driving element is frictionally coupled to the second carrying frame, and wherein the second driving element is located on a side part of the second carrying frame.

In the camera module according to the present application, the driving assembly further comprises an outer frame externally arranged on the second carrying frame, wherein the second driving element is sandwiched between the second carrying frame and the lens carrier through the second prepressing component and the second friction actuating portion, so that the second driving element is frictionally coupled to the second carrying frame, and wherein the second driving element is located on an upper part of the second carrying frame.

In the camera module according to the present application, the driving assembly further comprises an outer frame externally arranged on the second carrying frame, wherein the second driving element is sandwiched between the second carrying frame and the outer frame through the second prepressing component and the second friction actuating portion, so that the second driving element is frictionally coupled to the second carrying frame, and wherein the second driving element is located on a lower part of the second carrying frame.

In the camera module according to the present application, the driving assembly further comprises a first guiding mechanism arranged between the first carrying frame and the second carrying frame, and a second guiding mechanism arranged between the second carrying frame and the outer frame.

In the camera module according to the present application, the driving assembly further comprises a first guiding mechanism arranged between the first carrying frame and the second carrying frame, and a second guiding mechanism between the second carrying frame and the lens carrier.

In the camera module according to the present application, the driving assembly further comprises a first guiding mechanism arranged between the first carrying frame and the second carrying frame, and a second guiding mechanism arranged between the second carrying frame and the outer frame.

In the camera module according to the present application, the first prepressing component comprises a first elastic element, and the first elastic element is arranged between the piezoelectric plate structure of the first driving element and the second carrying frame, so as to force the friction driving portion of the first driving element to be abutted against the first friction actuating portion by means of an elastic force of the first elastic element, so that the first driving element is frictionally coupled to the first carrying frame; and the second prepressing element comprises a second elastic element, and the second elastic element is arranged between the piezoelectric plate structure of the second driving element and the outer frame, so as to force the friction driving portion of the second driving element to be abutted against the second friction actuating portion by means of an elastic force of the second elastic element, so that the second driving element is frictionally coupled to the second carrying frame.

In the camera module according to the present application, the first prepressing component comprises a first elastic element, and the first elastic element is arranged between the piezoelectric plate structure of the first driving element and the second carrying frame, so as to force the friction driving portion of the first driving element to be abutted against the first friction actuating portion by means of an elastic force of the first elastic element, so that the first driving element is frictionally coupled to the first carrying frame; and the second prepressing element comprises a second elastic element, and the second elastic element is arranged between the piezoelectric plate structure of the second driving element and the lens carrier, so as to force the friction driving portion of the second driving element to be abutted against the second friction actuating portion by means of an elastic force of the second elastic element, so that the second driving element is frictionally coupled to the second carrying frame.

In the camera module according to the present application, the first prepressing component comprises a first elastic element, and the first elastic element is arranged between the piezoelectric plate structure of the first driving element and the second carrying frame, so as to force the friction driving portion of the first driving element to be abutted against the first friction actuating portion by means of an elastic force of the first elastic element, so that the first driving element is frictionally coupled to the first carrying frame; and the second prepressing element comprises a second elastic element, and the second elastic element is arranged between the piezoelectric plate structure of the second driving element and the outer frame, so as to force the friction driving portion of the second driving element to be abutted against the second friction actuating portion by means of an elastic force of the second elastic element, so that the second driving element is frictionally coupled to the second carrying frame.

In the camera module according to the present application, the first elastic element and the second elastic element are designed as adhesives having elasticity.

In the camera module according to the present application, thickness dimensions of the first elastic element and the second elastic element are between 10 um and 50 um.

In the camera module according to the present application, the first prepressing component comprises a first magnetic attraction element arranged on the first carrying frame and a second magnetic attraction element arranged on the second carrying frame and corresponding to the first magnetic attraction element, so as to force the friction driving portion of the first driving element to be abutted against the first friction actuating portion by means of a magnetic attraction effect between the first magnetic attraction element and the second magnetic attraction element, so that the first driving element is frictionally coupled to the first carrying frame; and the second prepressing component comprises a third magnetic attraction element arranged on the second carrying frame and a fourth magnetic attraction element arranged on the outer frame and corresponding to the third magnetic attraction element, so as to force the friction driving portion of the second driving element to be abutted against the second friction actuating portion by means of a magnetic attraction effect between the third magnetic attraction element and the fourth magnetic attraction element, so that the second driving element is frictionally coupled to the second carrying frame.

In the camera module according to the present application, the first prepressing component comprises a first magnetic attraction element arranged on the first carrying frame and a second magnetic attraction element arranged on the second carrying frame and corresponding to the first magnetic attraction element, so as to force the friction driving portion of the first driving element to be abutted against the first friction actuating portion by means of a magnetic attraction effect between the first magnetic attraction element and the second magnetic attraction element, so that the first driving element is frictionally coupled to the first carrying frame; and the second prepressing component comprises a third magnetic attraction element arranged on the second carrying frame and a fourth magnetic attraction element arranged on the lens carrier and corresponding to the third magnetic attraction element, so as to force the friction driving portion of the second driving element to be abutted against the second friction actuating portion by means of a magnetic attraction effect between the third magnetic attraction element and the fourth magnetic attraction element, so that the second driving element is frictionally coupled to the second carrying frame.

In the camera module according to the present application, the first prepressing component comprises a first magnetic attraction element arranged on the first carrying frame and a second magnetic attraction element arranged on the second carrying frame and corresponding to the first magnetic attraction element, so as to force the friction driving portion of the first driving element to be abutted against the first friction actuating portion by means of a magnetic attraction effect between the first magnetic attraction element and the second magnetic attraction element, so that the first driving element is frictionally coupled to the first carrying frame; and the second prepressing component comprises a third magnetic attraction element arranged on the second carrying frame and a fourth magnetic attraction element arranged on the outer frame and corresponding to the third magnetic attraction element, so as to force the friction driving portion of the second driving element to be abutted against the second friction actuating portion by means of a magnetic attraction effect between the third magnetic attraction element and the fourth magnetic attraction element, so that the second driving element is frictionally coupled to the second carrying frame.

According to another aspect of the present application, the present application provides a camera module, comprising:
a photosensitive assembly, comprising a circuit board and a photosensitive chip electrically connected to the circuit board;
a frame carrier assembly mounted to the photosensitive assembly, wherein the frame carrier assembly comprises a first frame carrier;
an optical camera lens held on a photosensitive path of the photosensitive assembly by being mounted in the first frame carrier, wherein the optical camera lens is provided with an optical axis; and
a driving assembly, comprising a first driving element and a first prepressing component, wherein the first driving element is designed as a piezoelectric actuator, and wherein the first driving element is frictionally coupled to the first frame carrier through the first prepressing component, and is configured to, after being driven, move in a two-dimensional trajectory in a plane perpendicular to the optical axis in a manner of bending vibration along two directions, and thereby drive the first frame carrier by friction, so as to bring the optical camera lens to move in a first direction perpendicular to the optical axis.

**In** the camera module according to the present application, the frame assembly further comprises a second frame carrier externally arranged on the first frame carrier and an outer frame carrier externally arranged on the second frame carrier, wherein the driving assembly further comprises a second driving element and a second prepressing component, and the second driving element is designed as a piezoelectric actuator, and wherein the second driving element is frictionally coupled to the second frame carrier through the second prepressing component, and is configured to, after being driven, move in a two-dimensional trajectory in a plane perpendicular to the optical axis in a manner of bending vibration along two directions, and thereby drive the second frame carrier by friction, so as to bring the first frame carrier to bring the optical camera lens to move in a second direction perpendicular to the optical axis, the second direction being perpendicular to the first direction.

In the camera module according to the present application, the piezoelectric actuator comprises an actuating system and a driving circuit system, wherein the actuating system moves in a two-dimensional trajectory along a preset direction in a manner of bending vibration along two directions under the control of the driving circuit system.

In the camera module according to the present application, the actuating system comprises a piezoelectric plate structure and a friction driving portion fixed to the piezoelectric plate structure, and the friction driving portion is frictionally coupled to the first frame carrier or the second frame carrier.

In the camera module according to the present application, the piezoelectric plate structure has a first side surface extending along its depth direction and a second side surface extending along its height direction and adjacent to the first side surface, wherein the piezoelectric plate structure has a first resonance frequency along its depth direction and a second resonance frequency along its height direction, and wherein the second resonance frequency is greater than the first resonance frequency.

In the camera module according to the present application, the piezoelectric plate structure comprises a first piezoelectric region, a second piezoelectric region and a third piezoelectric region formed on the second side surface, and a fourth piezoelectric region formed on the first side surface, wherein the second piezoelectric region is located between the first piezoelectric region and the third piezoelectric region, and the fourth piezoelectric region is adjacent to the second piezoelectric region; and wherein the piezoelectric plate structure further comprises a first electrode pair electrically connected to the first piezoelectric region, a second electrode pair electrically connected to the second piezoelectric region, a third electrode pair electrically connected to the third piezoelectric region, and a fourth electrode pair electrically connected to the fourth electrical connection region.

In the camera module according to the present application, the driving circuit system comprises a first driving circuit and a second driving circuit, the first driving circuit is electrically connected to the first electrode pair and the third electrode pair, and the second driving circuit is electrically connected to the second electrode pair and the fourth electrode pair; and wherein vibration frequencies of circuit vibration signals output by the first driving circuit and the second driving circuit are equal to the first resonance frequency or the second resonance frequency.

In the camera module according to the present application, when the vibration frequency of the circuit vibration signal output by the first driving circuit is the first resonance frequency, the piezoelectric plate structure resonates in its height direction and partially resonates in its depth direction, so that the piezoelectric plate structure moves in a two-dimensional trajectory along a preset direction in a manner of bending vibration along two directions; and wherein when a vibration frequency of a circuit vibration signal input by the second driving circuit is the second resonance frequency, the piezoelectric plate structure resonates in its depth direction and partially resonates in its height direction, so that the piezoelectric plate structure moves in a two-dimensional trajectory along a preset direction in a manner of bending vibration along two directions.

In the camera module according to the present application, the driving assembly further comprises a first friction actuating portion and a second friction actuating portion, and the first friction actuating portion is sandwiched between a friction driving portion of the first driving element and the first frame carrier, so that the first driving element is frictionally coupled to the first frame carrier through the first friction actuating portion and the first prepressing component; and the second friction actuating portion is sandwiched between a friction driving portion of the second driving element and the second frame carrier, so that the second driving element is frictionally coupled to the second frame carrier through the second prepressing component and the second friction actuating portion.

In the camera module according to the present application, the first driving element is located on a side part of the first frame carrier.

In the camera module according to the present application, the first driving element is located on an upper part of the first frame carrier.

In the camera module according to the present application, the first driving element is located on a lower part of the first frame carrier.

In the camera module according to the present application, the second driving element is sandwiched between the second frame carrier and the outer frame carrier through the second prepressing component and the second friction actuating portion, so that the second driving element is frictionally coupled to the second frame carrier, and wherein the second driving element is located on a side part of the second frame carrier.

In the camera module according to the present application, the second driving element is sandwiched between the second frame carrier and the lens carrier through the second prepressing component and the second friction actuating portion, so that the second driving element is frictionally coupled to the second frame carrier, and wherein the second driving element is located on an upper part of the second frame carrier.

In the camera module according to the present application, the driving assembly further comprises an outer frame carrier externally arranged on the second frame carrier, wherein the second driving element is sandwiched between the second frame carrier and the outer frame carrier through the second prepressing component and the second friction actuating portion, so that the second driving element is frictionally coupled to the second frame carrier, and wherein the second driving element is located on a low part of the second frame carrier.

In the camera module according to the present application, the first prepressing component comprises a first elastic element, and the first elastic element is arranged between the piezoelectric plate structure of the first driving element and the second frame carrier, so as to force the friction driving portion of the first driving element to be abutted against the first friction actuating portion by means of an elastic force of the first elastic element, so that the first driving element is frictionally coupled to the first frame carrier; and the second prepressing element comprises a second elastic element, and the second elastic element is arranged between the piezoelectric plate structure of the second driving element and the outer frame carrier, so as to force the friction driving portion of the second driving element to be abutted against the second friction actuating portion by means of an elastic force of the second elastic element, so that the second driving element is frictionally coupled to the second frame carrier.

In the camera module according to the present application, the first prepressing component comprises a first elastic element, and the first elastic element is arranged between the piezoelectric plate structure of the first driving element and the second frame carrier, so as to force the friction driving portion of the first driving element to be abutted against the first friction actuating portion by means of an elastic force of the first elastic element, so that the first driving element is frictionally coupled to the first frame carrier; and the second prepressing element comprises a second elastic element, and the second elastic element is arranged between the piezoelectric plate structure of the second driving element and the lens carrier, so as to force the friction driving portion of the second driving element to be abutted against the second friction actuating portion by means of an elastic force of the second elastic element, so that the second driving element is frictionally coupled to the second frame carrier.

In the camera module according to the present application, the first prepressing component comprises a first elastic element, and the first elastic element is arranged between the piezoelectric plate structure of the first driving element and the second frame carrier, so as to force the friction driving portion of the first driving element to be abutted against the first friction actuating portion by means of an elastic force of the first elastic element, so that the first driving element is frictionally coupled to the first frame carrier; and the second prepressing element comprises a second elastic element, and the second elastic element is arranged between the piezoelectric plate structure of the second driving element and the outer frame carrier, so as to force the friction driving portion of the second driving element to be abutted against the second friction actuating portion by means of an elastic force of the second elastic element, so that the second driving element is frictionally coupled to the second frame carrier.

In the camera module according to the present application, the first elastic element and the second elastic element are designed as adhesives having elasticity.

In the camera module according to the present application, thickness dimensions of the first elastic element and the second elastic element are between 10 um and 50 um.

In the camera module according to the present application, the first prepressing component comprises a first magnetic attraction element arranged on the first frame carrier and a second magnetic attraction element arranged on the second frame carrier and corresponding to the first magnetic attraction element, so as to force the friction driving portion of the first driving element to be abutted against the first friction actuating portion by means of a magnetic attraction effect between the first magnetic attraction element and the second magnetic attraction element, so that the first driving element is frictionally coupled to the first frame carrier; and the second prepressing component comprises a third magnetic attraction element arranged on the second frame carrier and a fourth magnetic attraction element arranged on the outer frame carrier and corresponding to the third magnetic attraction element, so as to force the friction driving portion of the second driving element to be abutted against the second friction actuating portion by means of a magnetic attraction effect between the third magnetic attraction element and the fourth magnetic attraction element, so that the second driving element is frictionally coupled to the second frame carrier.

In the camera module according to the present application, the first frame carrier comprises a first groove recessedly formed on its surface, and the first friction actuating portion is arranged in the first groove, wherein the first groove forms a guiding groove for guiding the friction driving portion of the first driving element to move.

In the camera module according to the present application, the second frame carrier comprises a second groove recessedly formed on its surface, and the second friction actuating portion is arranged in the second groove, wherein the second groove forms a guiding groove for guiding the friction driving portion of the second driving element to move.

In the camera module according to the present application, the first groove has a reduced opening size, and/or the second groove has a reduced opening size.

In the camera module according to the present application, the driving assembly further comprises a first guiding mechanism arranged between the first frame carrier and the second frame carrier, and a second guiding mechanism arranged between the second frame carrier and the outer frame carrier.

In the camera module according to the present application, the driving assembly further comprises a first guiding mechanism arranged between the first frame carrier and the second frame carrier, and a second guiding mechanism arranged between the second frame carrier and the outer frame carrier.

Further objects and advantages of the present application will be fully embodied through the understanding of the following description and the drawings.

These and other objects, characteristics and advantages of the present application are fully embodied through the following detailed description, drawings and claims.

### Brief description of the drawings

The above and other objects, features, and advantages of the present application will become more apparent from the detailed description of the embodiments of the present application in conjunction with the drawings. The drawings, which are used to provide a further understanding of the embodiments of the present application and constitute a part of the description, are used to explain the present application together with the embodiments of the present application, and do not constitute a limitation of the present application. In the drawings, the same reference signs generally represent the same members or steps.
Fig. 1 illustrates a schematic view of a camera module according to an embodiment of the present application.
Fig. 2 illustrates a schematic view of a photosensitive assembly of the camera module according to the embodiment of the present application.
Fig. 3 illustrates another schematic view of the camera module according to the embodiment of the present application.
Fig. 4A illustrates a schematic view of a piezoelectric actuator according to an embodiment of the application.
Fig. 4B illustrates a schematic view of a piezoelectric plate structure of the piezoelectric actuator according to the embodiment of the present application.
Fig. 4C illustrates a schematic view of a driving circuit system of the piezoelectric actuator according to the embodiment of the present application.
Figs. 4D to 4F illustrate schematic views of the piezoelectric actuator according to the embodiment of the present application moving in a first mode.
Figs. 4G to 4I illustrate schematic views of the piezoelectric actuator according to the embodiment of the present application moving in a second mode.
Fig. 4J illustrates another schematic view of the piezoelectric plate structure of the piezoelectric actuator according to the embodiment of the present application.
Fig. 4K illustrates a schematic view of the piezoelectric actuator according to the embodiment of the present application acting on a moved object.
Fig. 4L illustrates a schematic view of movement of the piezoelectric actuator according to the embodiment of the present application.
Fig. 5 illustrates a schematic view of a variant of the camera module according to the embodiment of the present application.
Fig. 6 illustrates a schematic view of another variant of the camera module according to the embodiment of the present application.
Fig. 7 illustrates a schematic view of another variant of the camera module according to the embodiment of the present application.
Fig. 8 illustrates a schematic view of still another variant of the camera module according to the embodiment of the present application.
Fig. 9 illustrates a schematic view of a camera module according to an embodiment of the present application.
Fig. 10 illustrates a schematic view of a photosensitive assembly of the camera module according to the embodiment of the present application.
Fig. 11A illustrates a first schematic view of an optical camera lens, a frame carrier assembly and a driving assembly of the camera module according to the embodiment of the present application.
Fig. 11B illustrates a second schematic view of the optical camera lens, the frame carrier assembly and the driving assembly of the camera module according to the embodiment of the present application.
Fig. 11C illustrates a third schematic view of the optical camera lens, the frame carrier assembly and the driving assembly of the camera module according to the embodiment of the present application.
Fig. 12A illustrates a schematic view of a piezoelectric actuator according to an embodiment of the application.
Fig. 12B illustrates a schematic view of a piezoelectric plate structure of the piezoelectric actuator according to the embodiment of the present application.
Fig. 12C illustrates a schematic diagram of output signals of the driving circuit system of the piezoelectric actuator according to the embodiment of the present application.
Figs. 12D to 12F illustrate schematic views of the piezoelectric actuator according to the embodiment of the present application moving in a first mode.
Figs. 12G to 12I illustrate schematic diagrams of the piezoelectric actuator according to the embodiment of the present application moving in a second mode.
Fig. 12J illustrates another schematic view of the piezoelectric plate structure of the piezoelectric actuator according to the embodiment of the present application.
Fig. 12K illustrates a schematic view of the piezoelectric actuator according to the embodiment of the present application acting on a moved object.
Fig. 12L illustrates a schematic view of movement of the piezoelectric actuator according to the embodiment of the present application.
Fig. 13 illustrates a schematic view of a variant of the camera module according to the embodiment of the present application.
Fig. 14 illustrates a schematic view of another variant of the camera module according to the embodiment of the present application.
Fig. 15 illustrates a schematic view of still another variant of the camera module according to the embodiment of the present application.
Fig. 16 illustrates a schematic view of still another variant of the camera module according to the embodiment of the present application.
Fig. 17 illustrates a schematic view of still another variant of the camera module according to the embodiment of the present application.

### Detailed description of the embodiments

Hereinafter, exemplary embodiments according to the present application will be described in detail with reference to the drawings. Obviously, the described embodiments are only a part of the embodiments of the present application, rather than all the embodiments of the present application. It should be understood that the present application is not limited by the exemplary embodiments described herein.

### Exemplary Camera Module

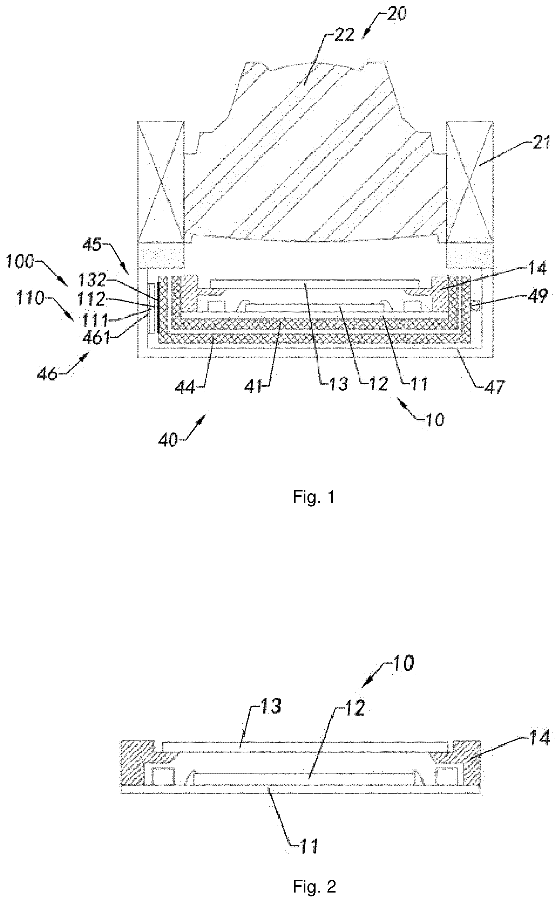

As shown in Fig. 1, a camera module according to an embodiment of the present application is explained. The camera module includes a photosensitive assembly 10, a lens assembly 20 held on a photosensitive path of the photosensitive assembly 10, and a driving assembly 40 for driving the photosensitive assembly 10 for optical image stabilization.

Correspondingly, the lens assembly 20 includes a lens carrier 21 and an optical lens 22 mounted on the lens carrier 21. In this embodiment, the optical lens 22 includes a lens barrel and at least one optical lens mounted in the lens barrel. It should be known by those skilled in the art that the resolution of the optical camera lens 20 is directly proportional to the number of optical lenses within a certain range, that is, the higher the resolution, the more the number of optical lenses. In a specific implementation, the optical lens 22 may be designed as an integrated camera lens, or a split camera lens, wherein when the optical lens 22 is designed as an integrated camera lens, the optical lens 22 includes a lens barrel, and all of the optical lenses are mounted in the lens barrel; and when the optical lens 22 is designed as a split optical camera lens, the optical lens 22 is assembled from at least two camera lens units.

Moreover, in this embodiment, the lens carrier 21 is a fixed carrier, that is, when the optical lens 22 is mounted on the lens carrier 21, the relative positional relationship between the lens carrier 21 and the optical lens 22 does not change. It should be understood that, in other examples of the present application, the lens carrier 21 may also be designed as a driving carrier, so that the relative positional relationship between the optical camera lens 21 and the photosensitive assembly 10 is changed by the driving carrier for autofocus, which is not limited in the present application.

As shown in Fig. 2, in this embodiment, the photosensitive assembly 10 includes a circuit board 11, a photosensitive chip 12 electrically connected to the circuit board 11, and a filter element 13 held on the photosensitive path of the photosensitive chip 12, wherein the circuit board 11 forms a mounting substrate of the photosensitive assembly 10. The circuit board may be designed as a Printed Circuit Board (PCB), a software combination board, or a reinforced Flexible Printed Circuit (PFC). Moreover, in some examples, a reinforcing plate (not shown) may also be arranged below the circuit board 11. For example, a steel sheet is arranged below the circuit board, so as to strengthen the strength of the circuit board and improve the heat dissipation performance of the photosensitive assembly through the steel sheet.

Further, in an example illustrated in Fig. 2, the photosensitive assembly 10 further includes a bracket 14 arranged on the circuit board 11, wherein the filter element 13 is mounted on the bracket 14 to be held on the photosensitive path of the photosensitive chip 12. In other examples of the present application, a specific implementation that the filter element 13 is held on the photosensitive path of the photosensitive chip 12 is not limited in the present application. For example, the filter element 13 may be designed as a filter film and coated on the surface of a certain optical lens of the lens group to play the effect of light filtering. For another example, the photosensitive assembly 10 may further include a filter element bracket (not shown) mounted on the bracket 14, wherein the filter element 13 is held on the photosensitive path of the photosensitive chip 12 by being mounted on the filter element bracket.

In a specific example of the embodiment of the present application, the bracket 14 may be designed as a plastic bracket, which is attached to the circuit board 11 by an adhesive. In other examples of the embodiment of the present application, the bracket 14 may also be designed as an integrated bracket integrally formed on the circuit board 11, such as a molded bracket, which is not limited in the present application.

As described previously, in order to meet the increasingly widespread market demands, high pixels, large chips and small sizes are irreversible development trends of the existing camera modules. With the development of photosensitive chips in the direction of high pixels and large chips, the size of optical components (such as filter elements, and optical camera lenses) that are compatible with photosensitive chips is also gradually increasing, which brings new challenges to driving elements used to drive the optical components for optical performance adjustment (e.g., optical focus, optical image stabilization, etc.).

Specifically, existing driving elements for driving optical components are electromagnetic motors, such as Voice Coil Motors (VCM), Shape Memory Alloy Actuators (SMA), etc. However, as the size of optical components increases, resulting in an increase in weight, the existing electromagnetic motors are gradually unable to provide sufficient driving force to drive the optical components to move. Quantitatively, existing voice coil motors and shape memory alloy drivers are only suitable for driving an optical component with a weight less than 100 mg. That is, if the weight of the optical component exceeds 100 mg, the existing drivers will not be able to meet the application requirements of camera modules.

In addition, as mobile terminal devices are becoming smaller and thinner, the density of component layout inside the driving element has also increased. Correspondingly, the existing voice coil motor is internally provided with a coil and magnets. When the distance between two magnets is too close (less than 7 mm), their internal magnetic fields will interact with each other, resulting in displacement or vibration of the magnets, and reducing the stability of its drive control.

Therefore, an adapted new driving solution for camera modules is needed. The new driver can not only meet the driving requirements of the camera module for optical performance adjustment, but also meet the development requirements of lightness and thinness of the camera module.

That is, for a camera module, a new driver needs to meet the following requirements: relatively larger driving force, and better driving performance (specifically including: higher accuracy driving control and longer driving stroke). At the same time, in addition to seeking a driver that meets the requirements of new technologies, when selecting a new driver, it is also necessary to consider that the selected driver can adapt to the current development trend of lightness and thinness of the camera module.

After research and testing, the present disclosure provides a piezoelectric actuator with a new structure, which can meet the technical requirements of the camera module for the driver. Moreover, the piezoelectric actuator is further arranged in the camera module in a suitable arrangement, so that it meets the structural and dimensional design requirements of the camera module.

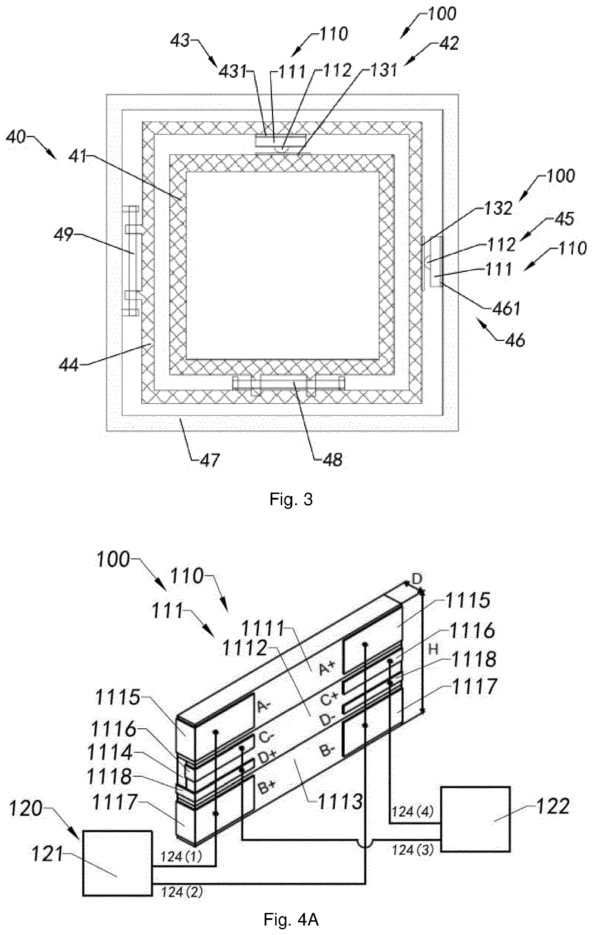

Figs. 4A to 4L illustrate schematic views of a piezoelectric actuator according to an embodiment of the application. As shown in Fig. 4A, the piezoelectric actuator 100 according to the embodiment of the present application includes an actuating system 110 and a driving circuit system 120, wherein the actuating system 110 moves in a two-dimensional trajectory along a preset direction in a manner of bending vibration along two directions under the control of the driving circuit system 120. In particular, in this embodiment, the piezoelectric actuator 100 is a high-efficiency semi-resonant driving system. After being turned on, the actuating system 110 of the piezoelectric actuator 100 moves in the two-dimensional trajectory along the preset direction in a manner of bending vibration along two directions to frictionally couple and move the acted object along the preset direction.

As shown in Fig. 4A, in this embodiment, the actuating system 110 includes a piezoelectric plate structure 111 and a friction driving portion 112 fixed to the piezoelectric plate structure 111. Here, the piezoelectric plate structure 111 may be symmetrical, or may also be asymmetrical. The piezoelectric plate structure 111 has a first side surface extending along its depth direction and a second side surface extending along its height direction and adjacent to the first side surface, wherein the piezoelectric plate structure 111 has a first resonance frequency along its depth direction (e.g., D as illustrated in Fig. 4A) and a second resonance frequency along its height direction (e.g., H as illustrated in Fig. 4A). Usually, the height dimension of the piezoelectric plate structure 111 is greater than its depth dimension, that is, the second resonance frequency is greater than the first resonance frequency.

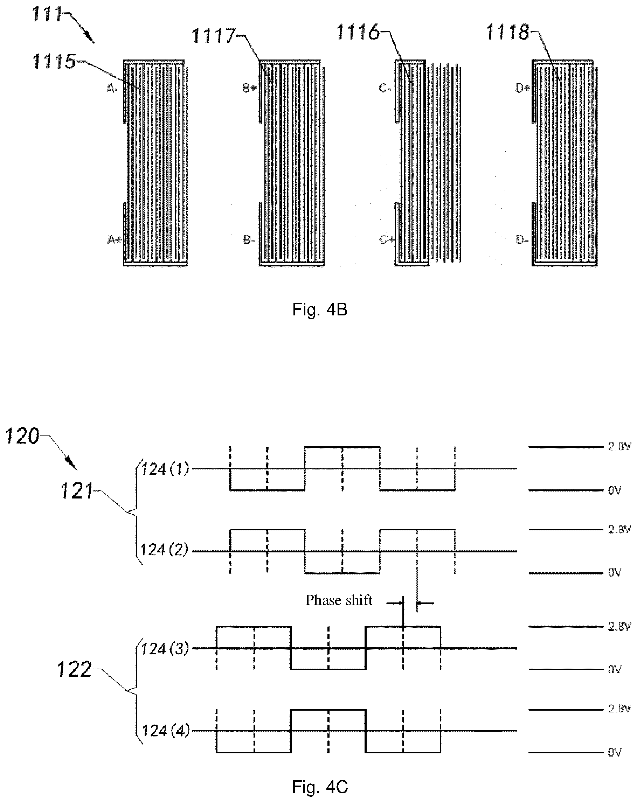

As shown in Fig. 4B, in this embodiment, the piezoelectric plate structure 111 includes at least one piezoelectric layer formed together. The thickness dimension of the piezoelectric plate structure 111 is in the range of 5 um to 40 um. In particular, in the embodiment of the present application, the at least one piezoelectric layer structure may be a single piezoelectric layer, or may also include a plurality of piezoelectric layers stacked together (for example, a plurality of parallel piezoelectric layers co-fired together). Here, compared with the single piezoelectric layer, the plurality of piezoelectric layers can achieve similar effects by applying a smaller voltage.

As shown in Fig. 4A, in this embodiment, the piezoelectric plate structure 111 includes a first piezoelectric region 1111, a second piezoelectric region 1112 and a third piezoelectric region 1113 formed on the second side surface, and a fourth piezoelectric region 1114 formed on the first side surface, wherein the second piezoelectric region 1112 is located between the first piezoelectric region 1111 and the third piezoelectric region 1113, and the fourth piezoelectric region 1114 is adjacent to the second piezoelectric region 1112. Moreover, the piezoelectric plate structure 111 further includes a first electrode pair 1115 electrically connected to the first piezoelectric region 1111, a second electrode pair 1116 electrically connected to the second piezoelectric region 1112, a third electrode pair 1117 electrically connected to the third piezoelectric region 1113 and a fourth electrode pair 1118 electrically connected to the fourth piezoelectric region 1114. That is, in the example illustrated in Fig. 1, the piezoelectric plate structure 111 includes 4 piezoelectric regions and four electrode pairs that are electrically connected to the 4 piezoelectric regions, respectively.

Further, in the embodiment of the present application, the first piezoelectric region 1111, the second piezoelectric region 1112, the third piezoelectric region 1113 and the fourth piezoelectric region 1114 have polarities generated by polarization during the manufacturing process, thereby forming positive and negative electrodes. Specifically, the first piezoelectric region 1111 is polarized during the manufacturing process, so that one electrode of the first electrode pair 1115 corresponding to the first piezoelectric region 1111 forms a negative electrode (e.g., A- as illustrated in Fig. 4A), and the other electrode forms a positive electrode (e.g., A+ as illustrated in Fig. 4A); the third piezoelectric region 1113 is polarized during the manufacturing process, so that one electrode of the third electrode pair 1117 corresponding to the third piezoelectric region 1113 forms a negative electrode (e.g., B- as illustrated in Fig. 4A), and the other electrode forms a positive electrode (e.g., B+ as illustrated in Fig. 4A); the second piezoelectric region 1112 is polarized during the manufacturing process, so that one electrode of the second electrode pair 1116 corresponding to the second piezoelectric region 1112 forms a negative electrode (e.g., C-as illustrated in Fig. 4A), and the other electrode forms a positive electrode (e.g., C+ as illustrated in Fig. 4A); and the fourth piezoelectric region 1114 is polarized during the manufacturing process, so that one electrode of the fourth electrode pair 1118 corresponding to the fourth piezoelectric region 1114 forms a negative electrode (e.g., D-as illustrated in Fig. 4A), and the other electrode forms the positive electrode (e.g., D+ as illustrated in Fig. 4A). It should be noted that in this embodiment, each electrode in the first electrode pair 1115 and/or the second electrode pair 1116 and/or the third electrode pair 1117 and/or the second electrode pair 1116 has an "L" shape.

As shown in Figs. 4A and 4B, in this embodiment, one electrode of the first electrode pair 1115 is coupled to and alternatively connected to one internal electrode of each piezoelectric layer of the first piezoelectric region 1111, and the other electrode of the first electrode pair 1115 is alternatively connected to an internal electrode of the first piezoelectric region 1111 opposite to each piezoelectric layer, wherein during the polarization process, one electrode of the first electrode pair 1115 is determined as a positive electrode and the other is determined as a negative electrode. One electrode of the second electrode pair 1116 is coupled to and alternatively connected to an internal electrode of each piezoelectric layer of the second piezoelectric region 1112, and the other electrode of the second electrode pair 1116 is alternatively connected to an internal electrode of the second piezoelectric region 1112 opposite to each piezoelectric layer, wherein during the polarization process, one electrode of the second electrode pair 1116 is determined as a positive electrode and the other electrode is determined as a negative electrode. One electrode of the third electrode pair 1117 is coupled to and alternatively connected to an internal electrode of each piezoelectric layer of the third piezoelectric region 1113, and the other electrode of the third electrode pair 1117 is alternatively connected to an internal electrode of the third piezoelectric region 1113 opposite to each piezoelectric layer, wherein during the polarization process, one electrode of the third electrode pair 1117 is determined as a positive electrode and the other electrode is determined as a negative electrode. One electrode of the third electrode pair 1117 is coupled to and alternatively connected to an internal electrode of each piezoelectric layer of the third piezoelectric region 1113, and the other electrode of the third electrode pair 1117 is alternatively connected to an internal electrode of the third piezoelectric region 1113 opposite to each piezoelectric layer, wherein during the polarization process, one electrode of the third electrode pair 1117 is determined as a positive electrode and the other electrode is determined as a negative electrode.

Further referring to Fig. 4A, in this embodiment, the driving circuit system 120 includes a first driving circuit 121 and a second driving circuit 122, the first driving circuit 121 is electrically connected to the first electrode pair 1115 and the third electrode pair 1117, and the second driving circuit 122 is electrically connected to the second electrode pair 1116 and the fourth electrode pair 1118, wherein the first driving circuit 121 and the second driving circuit 122 may be a full-bridge driving circuit, or may also be other driving circuits.

In particular, in this embodiment, the driving circuit system 120 has four types of output circuit vibration signals: 124(1) to 124(4), wherein the output circuit vibration signal may be an ultrasonic square wave vibration signal as shown in Fig. 3, or may also be other signals, for example, a sinusoidal signal.

When the piezoelectric actuator 100 is working, the piezoelectric plate structure 111 has two bending modes: mode 1 and mode 2, wherein mode 1 and mode 2 each have a different resonance frequency. The vibration amplitude of the bending mode of the piezoelectric plate structure 111 depends on the vibration frequency of the output circuit vibration signal. Specifically, when the driving circuit system 120 applies a circuit vibration signal to the piezoelectric plate structure 111 at the resonance frequency of one of the two bending modes (for example, the resonance frequency of mode 1), the vibration amplitude is completely amplified for the bending mode operating at its resonance frequency and only partially amplified for the other bending mode operating at partial resonance. More clearly, when the vibration frequency of the circuit vibration signal output by the first driving circuit 121 is the first resonance frequency, the piezoelectric plate structure 111 resonates in its height direction and partially resonates in its depth direction, so that the piezoelectric plate structure 111 moves in a two-dimensional trajectory along a preset direction in a manner of bending vibration along two directions; and wherein when a vibration frequency of a circuit vibration signal input by the second driving circuit 122 is the second resonance frequency, the piezoelectric plate structure 111 resonates in its depth direction and partially resonates in its height direction, so that the piezoelectric plate structure 111 moves in a two-dimensional trajectory along a preset direction in a manner of bending vibration along two directions.

More specifically, in the example illustrated in Figs. 4A and 4C, the first driving circuit 121 and the second driving circuit 122 can output four types of circuit vibration signals: 124(1) to 124(4). In this embodiment, the voltage of the circuit vibration signal is 2.8 V, and the four vibration signals each have a vibration frequency, which is substantially equal to the resonance frequency of any one of the two bending modes of the piezoelectric plate structure 111. That is, the vibration frequency is substantially equal to the first resonance frequency or the second resonance frequency. In addition, the circuit vibration signals from outputs 124(1) to 124(2) are phase-shifted by the driving circuit system 120 by about 0 to 90 degrees relative to the circuit vibration signals from outputs 124(3) to 124(4), thereby moving the acted object along one of two directions. When the driving circuit system 120 adjusts the phase shift of outputs 124(1) to 124(2) relative to the outputs 124(3) to 124(4) to about -180 to -90 degrees, so as to move a movable member along an opposite direction (i.e., another opposite direction of the two directions).

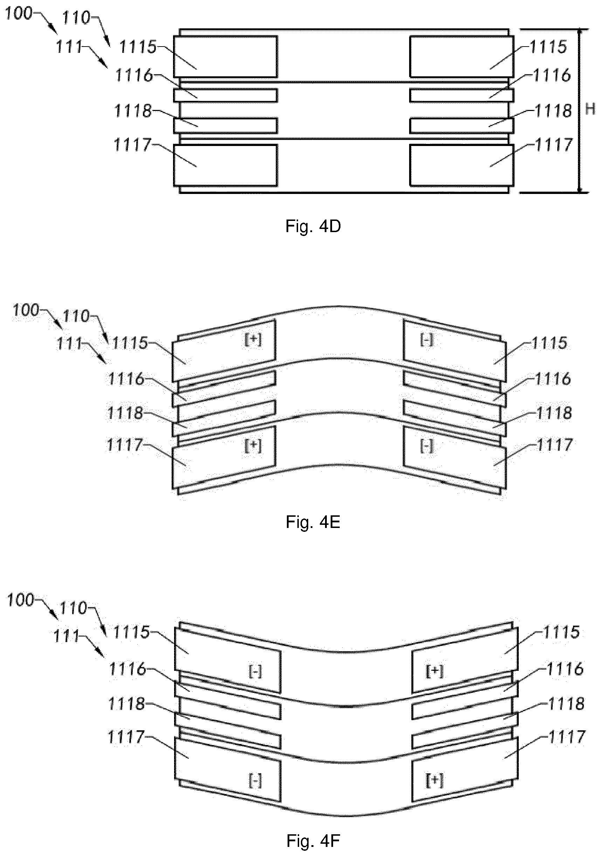

Figs. 4D to 4F illustrate schematic views of the piezoelectric actuator 100 according to the embodiment of the present application moving in a first mode. As shown in Figs. 4D to 4F, the bending mode is generated due to the application of circuit vibration signals from outputs 124(1)-124(2) of different stages to the first piezoelectric region 1111 and the third piezoelectric region 1113 having opposite polarities. When the piezoelectricity of all electrodes is 0, Fig. 4D shows a situation when the piezoelectric plate structure 111 is stationary. When the voltage difference between outputs 124(1) and 124(2) is positive, the length of the first piezoelectric region 1111 increases and the length of the third piezoelectric region 1113 decreases so that the piezoelectric plate is bent as shown in Fig. 4E. When the voltage difference between outputs 124(1) and 124(2) is negative, the length of the first piezoelectric region 1111 decreases and the length of the third piezoelectric region 1113 increases so that the piezoelectric plate structure is bent as shown in Fig. 4F.

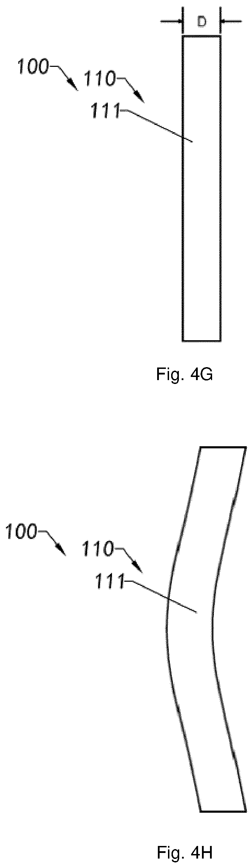

Figs. 4G to 4I illustrate schematic views of the piezoelectric actuator 100 according to the embodiment of the present application moving in a second mode.

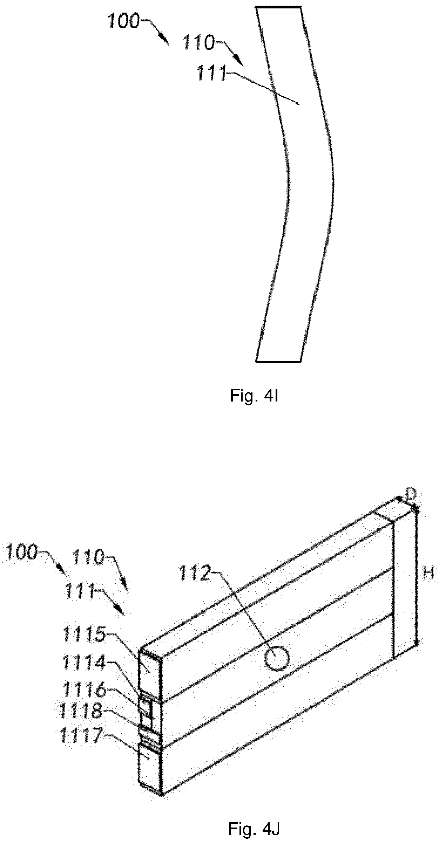

As shown in Figs. 4G to 4I, the bending mode is generated due to the application of vibration signals from outputs 124(3)-124(4) of different stages to the second piezoelectric region 1112 and the fourth piezoelectric region 1114 having opposite polarities. When the piezoelectricity of all electrodes is 0, Fig. 4G shows a situation when the piezoelectric plate structure 111 is stationary. When the voltage difference between outputs 124(3) and 124(4) is positive, the length of the second piezoelectric region 1112 decreases and the length of the fourth piezoelectric region 1114 increases so that the piezoelectric plate structure 111 is bent as shown in Fig. 4H. When the voltage difference between outputs 124(3) and 124(4) is negative, the length of the second piezoelectric region 1112 increases and the length of the fourth piezoelectric region 1114 decreases so that the piezoelectric plate structure is bent as shown in Fig. 4I.

Correspondingly, when the output circuit vibration signal as shown in Fig. 3 is applied to the actuating system 110, the actuating system 110 forms a two-dimensional trajectory with an elliptical orbital shape, that is, the driving circuit system 120 can control, according to a phase difference, the direction of rotation of the actuating system 110 on the elliptical orbital path, so that the actuating system 110 cam drive the acted object at a relatively smaller and more precise step speed.

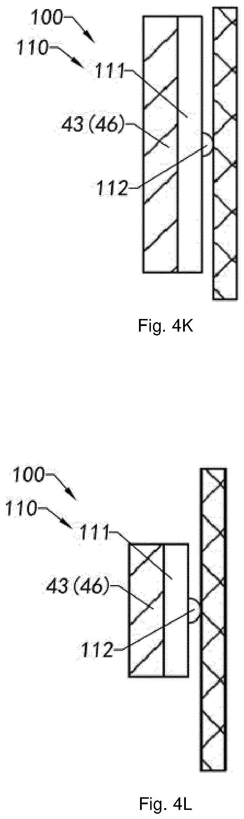

Fig. 4J illustrates another schematic view of the piezoelectric plate structure 111 of the piezoelectric actuator 100 according to the embodiment of the present application. As shown in Fig. 4J, in the embodiment of the present application, the actuating system 110 further includes a friction driving portion 112 fixed to the piezoelectric plate structure 111, wherein the friction driving portion 112 is suitable for being frictionally coupled to the acted object to move the acted object along a predetermined direction by friction. In order to enable the friction driving portion 112 to be frictionally coupled to the acted object, as shown in Fig. 4K, during the installation process, a prepressing component 43/46 is configured for the piezoelectric actuator 100, and the prepressing component 43/46 provides a prepressing force between the piezoelectric actuator 100 and the acted object, so that the friction driving portion 112 of the piezoelectric actuator 100 can be frictionally coupled to the acted object, so as to bring the acted object to move along a predetermined direction by friction, as shown in Fig. 4L.

In particular, in this embodiment, the friction driving portion 112 includes at least one contact pad, which may be fixed to the piezoelectric plate structure 111 along the depth direction, or may also be fixed to the piezoelectric plate structure 111 along the height direction. In this embodiment, the at least one contact pad may have a hemispherical shape. Of course, it may also be in other shapes, for example, a semi-cylindrical shape, a platform, a rectangle, or the like. Preferably, the at least one contact pad is made of a material with better friction performance and durability. For example, it may be made of a metal oxide material (for example, zirconia, alumina or the like).

It is worth mentioning that, compared with a traditional electromagnetic driver, the piezoelectric actuator 100 has the advantages of small size, large driving force and high accuracy. Quantitatively, the piezoelectric actuator 100 according to the embodiment of the present application can provide a driving force ranging from 0.6 N to 2 **N,** which is sufficient to drive a component with a weight more than 100 mg.

In addition to being able to provide a relatively large driving force, the piezoelectric actuator 100 also has other advantages over the traditional electromagnetic motor scheme and memory alloy motor scheme, including but not limited to: a relatively small size (with a slender shape), better response accuracy, a relatively simpler structure, relatively simpler driving control, high product consistency, no electromagnetic interference, a relatively larger stroke, short stabilization time, a relatively smaller weight, etc.

Specifically, the camera module requires that the configured driver has characteristics such as a long driving stroke and good alignment accuracy. In the existing voice coil motor scheme, in order to ensure the linearity of motion, it is necessary to design additional guide rods or ball guide rails; it is also necessary to adapt large-sized driving magnets/coils at the side part of the camera lens; and it is also necessary to set up auxiliary positioning devices such as balls, spring leaf, and suspension wires. In order to accommodate more components, ensure the structural strength and reserve structural gaps, it often leads to the larger lateral dimension of the module, the complicated structural design, and the heavier weight of the module. The memory alloy motor scheme is limited by the relatively small stroke that the memory alloy scheme can provide in the same proportion, and there are also reliability risks such as potential disconnection.

The piezoelectric actuator 100 has a relatively simple structure, and the assembly structure is simpler. In addition, the size of its elements is substantially unrelated to the size of the motion stroke of the piezoelectric actuator 100. Therefore, the piezoelectric actuator 100 can realize the advantages of large driving force, small size, and small weight. Also, it is designed to match a larger stroke or a heavier component weight, and the integration degree in the design is also higher.

Further, the piezoelectric actuator 100 pushes the object to be pushed to perform micron-scale motion in a frictional contact manner. Compared with the non-contact manner of driving the object to be pushed in the electromagnetic scheme, in which it needs to rely on electromagnetic force to counteract gravity and frictional force, it has the advantages of greater driving force, greater displacement and lower power consumption, and also has higher control accuracy. Moreover, when there are a plurality of motor mechanisms, the piezoelectric actuator 100 does not have a magnet coil structure, so there is no magnetic interference problem. In addition, the piezoelectric actuator 100 can be self-locked by relying on the frictional force between the components, and thus, the vibration and noise of the camera module during optical image stabilization can be reduced.

After the piezoelectric actuator 100 is selected as a driver to drive the photosensitive assembly 10 for optical image stabilization, specifically, as shown in Figs. 1 and 3, in this embodiment, the driving assembly 40 includes a first carrying frame 41, a first driving element 42, a first prepressing component 43, a second carrying frame 44, a second driving element 45, a second prepressing component 46, and an outer frame 47, wherein the first driving element 42 and the second driving element 45 are designed as the piezoelectric actuator 100 as described above.

Correspondingly, as shown in Figs. 1 and 3, in this embodiment, the photosensitive assembly 10 is mounted on the first carrying frame 41, the first driving element 42 is frictionally coupled to the first carrying frame 41 through the first prepressing component 43, and is configured to, after being driven, move along a first direction in a manner of bending vibration along two directions in a two-dimensional trajectory in a plane perpendicular to the optical axis, and thereby drive the first carrying frame 41 by friction, so as to bring the photosensitive assembly 10 to move in the first direction in the plane perpendicular to the optical axis for optical image stabilization. The second carrying frame 44 is externally arranged on the first carrying frame 41, wherein the second driving element 45 is frictionally coupled to the second carrying frame 44 through the second prepressing component 46, and is configured to, after being driven, move along a second direction in a manner of bending vibration along two directions in a two-dimensional trajectory in a plane perpendicular to the optical axis, and thereby drive the second carrying frame 44 by friction, so as to bring the first carrying frame 41 to bring the photosensitive assembly 10 to move in the plane perpendicular to the optical axis for optical image stabilization in a second direction, the first direction being perpendicular to the second direction. In one example, the first direction is an X-axis direction, and the second direction is a Y-axis direction.

Here, the first driving element 42 being frictionally coupled to the first carrying frame 41 includes: the first driving element 42 directly frictionally interacting with the first carrying frame 41, and the first driving element 42 indirectly frictionally interacting with the first carrying frame 41 (that is, although there is no direct friction force between the first driving element 42 and the first carrying frame 41, the friction driving force generated by the first driving element 42 can act on the first carrying frame 41). Correspondingly, the second driving element 43 being frictionally coupled between the second carrying frame 44 and the outer frame 47 includes: the second driving element 43 directly frictionally interacting with the second carrying frame 44, and the second driving element 43 indirectly frictionally interacting with the second carrying frame 44 (that is, although there is no direct friction force between the second driving element 43 and the second carrying frame 44, the frictional driving force generated by the second driving element 44 can act on the second carrying frame 44).

More specifically, in this embodiment, as shown in Fig. 3, the first driving element 42 is sandwiched between the first carrying frame 41 and the second carrying frame 44 through the first prepressing component 43, so that the first driving element 42 is frictionally coupled to the first carrying frame 41.

Correspondingly, in this embodiment, the first prepressing component 43 includes a first elastic element 431, and the first elastic element 431 is arranged between the piezoelectric plate structure 111 of the first driving element 42 and the second carrying frame 44, so as to force the first driving element 42 to be frictionally coupled to the first carrying frame 41 through an elastic force of the first elastic element 431. In an example of the present application, the friction driving portion 112 of the first driving element 42 is directly in contact with the surface of the outer side wall of the first carrying frame 41, and correspondingly, the elastic force provided by the first elastic element 431 can force the friction driving portion 112 of the first driving element 42 to be in contact with the surface of the outer side wall of the first carrying frame 41 to form a frictional contact relationship between the two. In this way, after the first driving element 42 is turned on, the friction driving portion 112 of the first driving element 42 can drive the first carrying frame 41 to move along the first direction by means of friction driving, so as to bring the photosensitive assembly 10 to move along the first direction for optical image stabilization in the first direction.

In a specific example of the present application, the first elastic element 431 is designed as an adhesive having elasticity, that is, the first elastic element 431 is designed as glue having elasticity after being cured. Correspondingly, during the installation process, a layer of adhesive with a thickness of 10 um to 50 um may be applied between the surface of the inner side wall of the second carrying frame 44 and the piezoelectric plate structure 111 of the first driving element 42, so as to form the first elastic element 431 arranged between the piezoelectric plate structure 111 of the first driving element 42 and the second carrying frame 44 after the adhesive is cured and molded. It should be understood that, in this example, the first elastic element 431 can also enable the first driving element 42 to be fixed on the surface of the inner side wall of the second carrying frame 44 while providing the prepressing force. Preferably, the first elastic element 431 has relatively high flatness, that is, when applying the adhesive, it is ensured as much as possible that the applied adhesive has relatively high flatness and uniformity, so that the first driving element 42 can be flatly fixed on the surface of the inner side wall of the second carrying frame 44, thereby improving the driving stability of the first driving element 42.

Corresponding, in this embodiment, as shown in Fig. 3, the second driving element 45 is sandwiched between the second carrying frame 44 and the outer frame 47 through the second prepressing component 46, so that the second driving element 45 is frictionally coupled to the second carrying frame 44. Moreover, it should be noted that, as shown in Fig. 1, the lens carrier 21 of the lens assembly 20 is carried on the outer frame 47.

Further, as shown in Fig. 3, in this embodiment, the second prepressing component 46 includes a second elastic element 461, and the second elastic element 461 is arranged between the piezoelectric plate structure 111 of the second driving element 45 and the outer frame 47, so as to force the second driving element 45 to be frictionally coupled to the second carrying frame 44 through an elastic force of the second elastic element 461. Correspondingly, in a specific example of the present application, the friction driving portion 112 of the second driving element 45 is directly in contact with the surface of the outer side wall of the second carrying frame 44, and correspondingly, the elastic force provided by the second elastic element 461 can force the friction driving portion 112 of the second driving element 45 to be in contact with the surface of the outer side wall of the second carrying frame 44 to form a frictional contact relationship between the two. In this way, after the second driving element 45 is turned on, the friction driving portion 112 of the second driving element 45 can drive the second carrying frame 44 to move along the second direction by means of friction driving, so as to bring the photosensitive assembly 10 to move along the second direction for optical image stabilization in the second direction.

In a specific example of the present application, the second elastic element 461 is designed as an adhesive having elasticity, that is, the second elastic element 461 is designed as glue having elasticity after being cured. Correspondingly, during the installation process, a layer of adhesive with a thickness of 10 um to 50 um may be applied between the surface of the inner side wall of the outer frame 47 and the piezoelectric plate structure 111 of the second driving element 45, so as to form the second elastic element 461 arranged between the piezoelectric plate structure 111 of the second driving element 45 and the outer frame 47 after the adhesive is cured and molded. It should be understood that, in this example, the second elastic element 461 can also enable the second driving element 45 to be fixed on the surface of the inner side wall of the outer frame 47 while providing the prepressing force. Preferably, the second elastic element 461 has relatively high flatness, that is, when applying the adhesive, it is ensured as much as possible that the applied adhesive has relatively high flatness and uniformity, so that the second driving element 45 can be flatly fixed on the surface of the inner side wall of the outer frame 47, thereby improving the driving stability of the second driving element 45.

It is worth mentioning that, in other embodiments of the present application, the first elastic element 431 and the second elastic element 461 may also be designed as elastic elements without viscosity, for example, rubber with the inherent characteristic of elasticity in the material itself, or a spring or leaf spring that produces elasticity due to deformation, etc., which is also not limited in the present application.

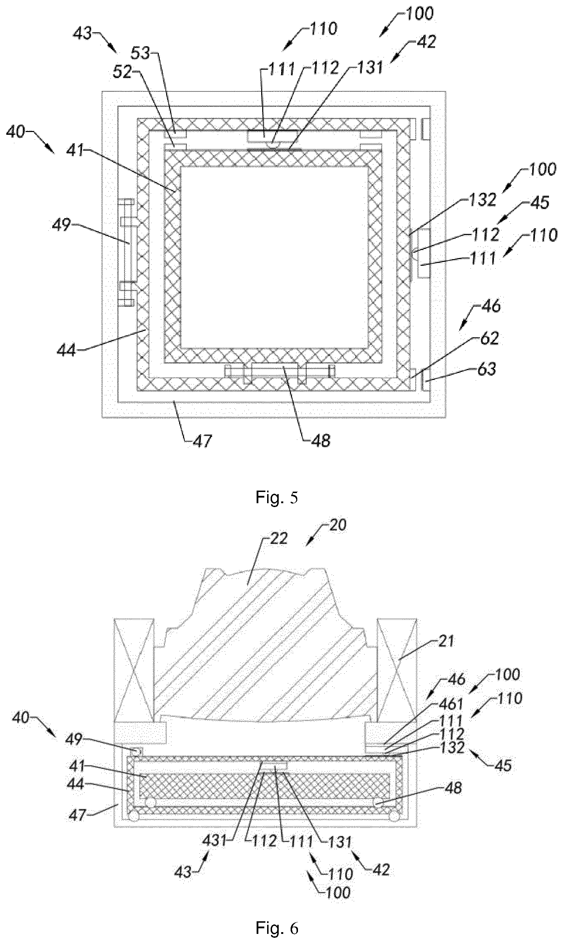

It is worth mentioning that, in other variant embodiments of the present application, the structural configuration of the first prepressing component 43 and the second prepressing component 46 may also be adjusted. For example, in a variant as illustrated in Fig. 5, the first prepressing component 43 includes a first magnetic attraction element 52 arranged on the first carrying frame 41 and a second magnetic attraction element 53 arranged on the second carrying frame 44 and corresponding to the first magnetic attraction element 52, as so to force the first driving element 42 to be frictionally coupled to the first carrying frame 41 through an magnetic attraction action between the first magnetic attraction element 52 and the second magnetic attraction element 53. The second prepressing component 46 includes a third magnetic attraction element 62 arranged on the second carrying frame 44 and a fourth magnetic attraction element 63 arranged on the lens carrier 21 and corresponding to the third magnetic attraction element 62, as so to force the second driving element 45 to be frictionally coupled to the second carrying frame 44 through an magnetic attraction action between the third magnetic attraction element 62 and the fourth magnetic attraction element 63.

In this variant, the first magnetic attraction element 52 and the second magnetic attraction element 53 refer to magnetic attraction assemblies that can attract each other. For example, the first magnetic attraction element 52 may be designed as a magnet, and the second magnetic attraction element 53 may be designed as a magnetic component, for example, a material made of a metal such as iron, nickel, cobalt or the like. For another example, the first magnetic attraction element 52 may be designed as a magnet, and the second magnetic attraction element 53 may also be designed as a magnet. In this variant, the third magnetic attraction element 62 and the fourth magnetic attraction element 63 refer to magnetic attraction assemblies that can attract each other. For example, the third magnetic attraction element 62 may be designed as a magnet, and the fourth magnetic attraction element 63 may be designed as a magnetic component, for example, a material made of a metal such as iron, nickel, cobalt or the like. For another example, the third magnetic attraction element 62 may be designed as a magnet, and the fourth magnetic attraction element 63 may also be designed as a magnet.

In order to enable the first driving element 42 and the second driving element 45 to drive the first carrying frame 41 and the second carrying frame 44 more smoothly, as shown in Fig. 3, the driving assembly 40 further includes a first guiding mechanism 48 arranged between the first carrying frame 41 and the second carrying frame 44 and a second guiding mechanism 49 arranged between the second carrying frame 44 and the outer carrying frame 47, wherein the first guiding mechanism 48 is configured to guide the first carrying frame 41 to move along the first direction, and the second guiding mechanism 49 is configured to guide the second carrying frame 44 to move along the second direction.

More specifically, as shown in Fig. 3, in this embodiment, the first guiding mechanism 48 and the second guiding mechanism 49 are designed as guide rod structures. Correspondingly, the first guiding mechanism 48 includes a first guide rod arranged on the outer side wall of the first carrying frame 41 and extending along the first direction, wherein both ends of the first guide rod are fixed on the inner side wall of the second carrying frame 44. In particular, in this embodiment, the first guide rod and the first driving element 42 are oppositely arranged in the same direction. Thus, after the first driving element 42 is turned on, the first carrying frame 41 is guided to move along the direction in which the first guide rod extends, so as to improve the movement stability of the first carrying frame 41.

Correspondingly, in this embodiment, the second guiding mechanism 49 includes a second guide rod arranged on the outer side wall of the second carrying frame 44 and extending along the second direction, wherein both ends of the second guide rod are fixed on the inner side wall of the outer frame 47. In particular, in this embodiment, the second guide rod and the second driving element 45 are oppositely arranged in the same direction. Thus, after the second driving element 45 is turned on, the second carrying frame 44 is guided to move along the direction in which the second guide rod extends, so as to improve the movement stability of the second carrying frame 44.

It is worth mentioning that, in other embodiments of the present application, the first guiding mechanism 48 and the second guiding mechanism 49 may also be realized based on other principles, for example, through a rolling ball-rolling groove mechanism, a slider-sliding groove mechanism, etc., which is not limited in the present application.

In order to optimize the driving performance of the first driving element 42 and the second driving element 45, in the embodiment of the present application, as shown in Figs. 1 to 3, the driving assembly 40 further includes a first friction actuating portion 131 and a second friction actuating portion 132, wherein the first friction actuating portion 131 is arranged between the first driving element 42 and the first carrying frame 41, the friction driving portion 112 of the first driving element 42 is in contact with the first friction actuating portion 131 under the action of the first prepressing component 43, and the first friction actuating portion 131 is in contact with the surface of the outer side wall of the first carrying frame 41. In this way, the friction driving force provided by the first driving element 42 can act on the first carrying frame 41 through the first friction actuating portion 131, so as to bring the first carrying frame 41 and the photosensitive assembly 10 to move along the first direction. That is, in this variant embodiment, the prepressing force between the friction driving portion 112 of the first driving element 42 and the first carrying frame 41 is an indirect prepressing force, that is, although the friction driving portion 112 of the first driving element 42 is not in direct contact with the first carrying frame 41, there is still a prepressing force between the two, so that the friction driving portion 112 of the first driving element 42 can drive the first carrying frame 41 by means of friction driving.

Correspondingly, the second friction actuating portion 132 is arranged between the second driving element 45 and the second carrying frame 44, and the friction driving portion 112 of the second driving element 45 is in contact with the second friction actuating portion 132 under the action of the second prepressing component 46, and the second friction actuating portion 132 is in contact with the surface of the outer wall of the second carrying frame 44. In this way, the friction driving force provided by the second driving element 45 can act on the second carrying frame 44 via the second friction actuating portion 132, so as to bring the second carrying frame 44, the first carrying frame 41 and the photosensitive assembly 10 to move along the second direction for optical image stabilization in the second direction.

More specifically, as shown in Fig. 1, in this embodiment, the first friction actuating portion 131 has a first surface and a second surface opposite to the first surface, wherein under the action of the first prepressing component 43, the first surface of the first friction actuating portion 131 is in contact with the surface of the outer side wall of the first carrying frame 41, and the second surface is in contact with the end face of at least one of the plurality of friction driving element 121 at the second end. In this way, the friction driving portion 112 of the first driving element 42 is in contact with the first friction actuating portion 131 and the first friction actuating portion 131 is in contact with the first carrying frame 41, so that the friction driving force provided by the first driving element 42 can act on the first carrying frame 41 via the first friction actuating portion 131. Correspondingly, the second friction actuating portion 132 has a third surface and a fourth surface opposite to the third surface, wherein under the action of the second prepressing component 46, the third surface of the second friction actuating portion 132 is in contact with the surface of the outer side wall of the second carrying frame 44, and the fourth surface is in contact with the end surface of at least one of the plurality of friction driving elements 121 at the second end. In this way, the friction driving portion 112 of the second driving element 45 is in contact with the second friction actuating portion 132 and the second friction actuating portion 132 is in contact with the second carrying frame 44, so that the friction driving force provided by the second driving element 45 can act on the second carrying frame 44 via the second friction actuating portion 132.

It is worth mentioning that, although in the example illustrated in Fig. 1, the first friction actuating portion 131 and the second friction actuating portion 132, as a separate component, are arranged between the first driving element 42 and the first carrying frame 41, and between the second driving element 45 and the second carrying frame 44, respectively, for example, the first friction actuating portion 131 is implemented is a separate component and is attached to the side surface of the first carrying frame 41, or, the second friction actuating portion 132 is designed as a separate component and is attached to the side surface of the second carrying frame 44. For another example, the first friction actuating portion 131 is designed as a coating coated on the side surface of the first carrying frame 41, or the second friction actuating portion 132 is designed as a coating coated on the side surface of the second carrying frame 44. It should be understood that, in other examples of the present application, the first friction actuating portion 131 may also be integrally formed on the surface of the outer side wall of the first carrying frame 41, that is, the first friction actuating portion 131 and the first carrying frame 41 has an integrated structure. Of course, in other examples of the present application, the second friction actuating portion 132 may also be integrally formed on the surface of the outer side wall of the second carrying frame 44, that is, the second friction actuating portion 132 and the second carrying frame 44 has an integrated structure.

Fig. 6 illustrates a schematic view of still another variant of the camera module according to the embodiment of the present application. Compared with the example illustrated in Fig. 1, in this variant embodiment, the arrangement of the first driving element 42 and the second driving element 45 is adjusted.

Specifically, in the example illustrated in Figs. 1 and 3, the first driving element 42 is located on the side part of the first carrying frame 41, and the second driving element 45 is located on the side part of the second carrying frame 44. In contrast, as shown in Fig. 6, in this variant embodiment, the first driving element 42 is located on the upper part of the first carrying frame 41, and the second driving element 45 is located on the upper part of the second carrying frame 44.

In a specific example of this variant, the first driving element 42 is sandwiched between the first carrying frame 41 and the second carrying frame 44 up and down through the first prepressing component 43. In this way, the first driving element 42 is frictionally coupled to the first carrying frame 41. The second driving element 45 is sandwiched between the second carrying frame 44 and the lens carrier 21 up and down through the second prepressing component 46. In this way, the second driving element 45 is frictionally coupled to the second carrying frame 44.

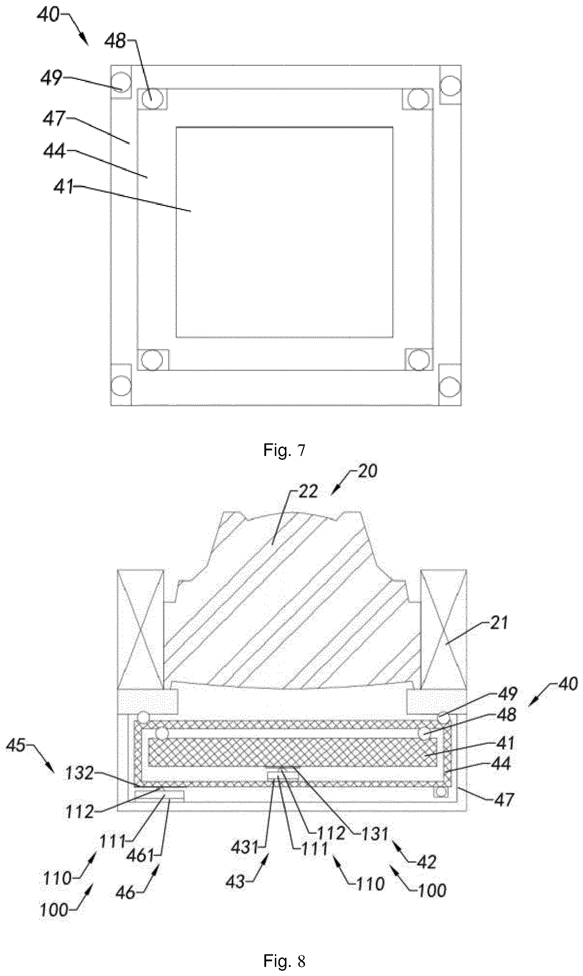

Correspondingly, the driving assembly 40 further includes a first guiding mechanism 48 arranged between the first carrying frame 41 and the second carrying frame 44, and a second guiding mechanism 49 arranged between the second carrying frame 44 and the outer frame 47. However, unlike the example illustrated in Figs. 1 and 3, in this variant embodiment, the first guiding mechanism 48 and the second guiding mechanism 49 are designed as a rolling ball-rolling groove mechanism, as shown in Fig. 7.

Fig. 8 illustrates a schematic view of still another variant of the camera module according to the embodiment of the present application. Compared with the example illustrated in Fig. 1, in this variant embodiment, the arrangement of the first driving element 42 and the second driving element 45 is adjusted again.

Specifically, as shown in Fig. 8, in this variant embodiment, the first driving element 42 is located on the lower part of the first carrying frame 41, and the second driving element 45 is located on the lower part of the second carrying frame 44.

In a specific example of this variant, the first driving element 42 is sandwiched between the first carrying frame 41 and the second carrying frame 44 up and down through the first prepressing component 43. In this way, the first driving element 42 is frictionally coupled to the first carrying frame 41. The second driving element 45 is sandwiched between the second carrying frame 44 and the outer frame 47 up and down through the second prepressing component 46. In this way, the second driving element 45 is frictionally coupled to the second carrying frame 44.

Correspondingly, the driving assembly 40 further includes a first guiding mechanism 48 arranged between the first carrying frame 41 and the second carrying frame 44, and a second guiding mechanism 49 arranged between the second carrying frame 44 and the outer frame 47. However, unlike the example illustrated in Figs. 1 and 3, in this variant embodiment, the first guiding mechanism 48 and the second guiding mechanism 49 are designed as a rolling ball-rolling groove mechanism, as shown in Fig. 8.

In summary, the camera module based on the embodiment of the present application is explained, wherein the camera module adopts the piezoelectric actuator 100 as a driver, which can not only meet the driving requirements of the camera module for optical performance adjustment, but also meet the development demands of the camera module for lightness and thinness.

Although the camera module is a traditional upright camera module as an example in the embodiment of the present application, it should be understood by those of ordinary skill in the art that the piezoelectric actuator 100 according to the embodiment of the present application may also be used as a driver in a periscope camera module, which is not limited in the present application.

### Exemplary Camera Module

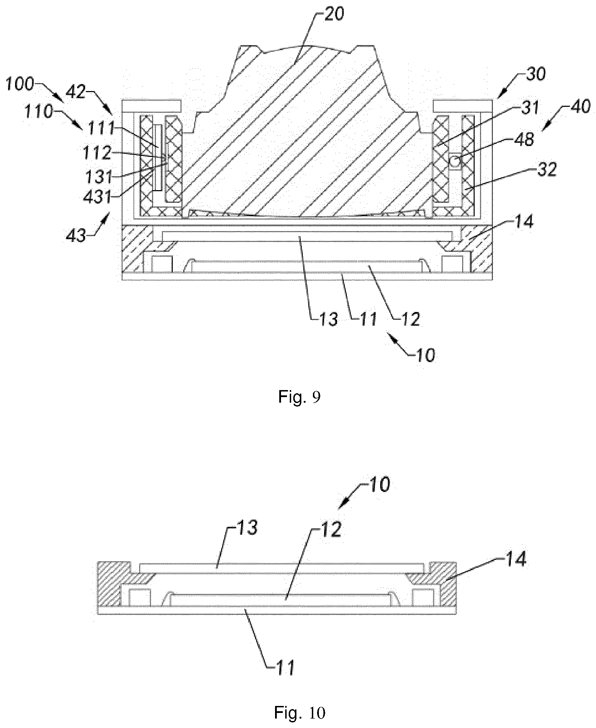

As shown in Fig. 9, a camera module according to an embodiment of the present application is explained. The camera module includes a photosensitive assembly 10, an optical camera lens 20 held on a photosensitive path of the photosensitive assembly 10, a frame carrier assembly 30, and a driving assembly 40 for driving the optical camera lens 20 for optical image stabilization.

As shown in Fig. 10, in this embodiment, the photosensitive assembly 10 includes a circuit board 11, a photosensitive chip 12 electrically connected to the circuit board 11, and a filter element 13 held on the photosensitive path of the photosensitive chip 12, wherein the circuit board 11 forms a mounting substrate of the photosensitive assembly 10. The circuit board may be designed as a Printed Circuit Board (PCB), a software combination board, or a reinforced Flexible Printed Circuit (PFC). Moreover, in some examples, a reinforcing plate (not shown) may also be arranged below the circuit board 11. For example, a steel sheet is arranged below the circuit board, so as to strengthen the strength of the circuit board and improve the heat dissipation performance of the photosensitive assembly through the steel sheet.

Further, in an example illustrated in Fig. 10, the photosensitive assembly 10 further includes a bracket 14 arranged on the circuit board 11, wherein the filter element 13 is mounted on the bracket 14 to be held on the photosensitive path of the photosensitive chip 12. In other examples of the present application, a specific implementation that the filter element 13 is held on the photosensitive path of the photosensitive chip 12 is not limited in the present application. For example, the filter element 13 may be designed as a filter film and coated on the surface of a certain optical lens element of the optical camera lens to play the effect of light filtering. For another example, the photosensitive assembly 10 may further include a filter element bracket mounted on the bracket 14 (not shown), wherein the filter element 13 is held on the photosensitive path of the photosensitive chip 12 by being mounted on the filter element bracket.

In a specific example of the embodiment of the present application, the bracket 14 may be designed as a plastic bracket, which is attached to the circuit board 11 by an adhesive. In other examples of the embodiment of the present application, the bracket 14 may also be designed as an integrated bracket integrally formed on the circuit board 11, such as a molded bracket, which is not limited in the present application.

As shown in Fig. 9, in the embodiment of the present application, the frame carrier assembly 30 is mounted on the photosensitive assembly 10, wherein the frame carrier assembly 30 includes an outer frame carrier 33 mounted on the bracket 14, a second frame carrier 32 accommodated in the outer frame carrier 33 and the first frame carrier 31 accommodated in the second frame carrier 32. That is, in this embodiment, the frame carrier assembly includes a first frame carrier 31, a second frame carrier 32 externally arranged on the first frame carrier 31, and an outer frame carrier 33 externally arranged on the second frame carrier 32.

Particularly, in this embodiment, the optical camera lens 20 is mounted in the first frame carrier 31. In this way, the optical camera lens 20 is held on the photosensitive path of the photosensitive assembly 10. That is, in this embodiment, the first frame carrier 31 forms a mounting carrier of the optical camera lens.

Moreover, in the embodiment of the present application, there is a gap between the second frame carrier 32 and the outer frame carrier 33, and there is a gap between the first frame carrier 31 and the second frame carrier 32. That is, there is an available space between the second frame carrier 32 and the outer frame carrier 33, wherein the available space can be used to mount a driver for driving the second frame carrier 32 to move. There is an available space between the first frame carrier 31 and the second frame carrier 32, wherein the available space can be used to mount a driver for driving the first frame carrier 31 to move. Here, the selection and installation of the driver will be explained in more detail in the subsequent description.

As shown in Fig. 9, in the embodiment of the present application, the optical lens 22 includes a lens barrel 21 and at least one optical lens 22 mounted in the lens barrel 21. **It** should be known by those skilled in the art that the resolution of the optical camera lens 20 is directly proportional to the number of optical lenses 22 within a certain range, that is, the higher the resolution, the more the number of optical lenses 22. **In** a specific implementation, the optical camera lens 20 may be designed as an integrated camera lens, or a split camera lens, wherein when the optical camera lens 20 is designed as an integrated camera lens, the optical camera lens 20 includes a lens barrel 21, and all of the optical lenses 22 are mounted in the lens barrel 21; and when the optical camera lens 20 is designed as a split optical camera lens, the optical camera lens 20 is assembled from at least two camera lens units.

As described previously, in order to meet the increasingly widespread market demands, high pixels, large chips and small sizes are irreversible development trends of the existing camera modules. With the development of photosensitive chips in the direction of high pixels and large chips, the size of optical components (such as filter elements, and optical camera lenses) that are compatible with photosensitive chips is also gradually increasing, which brings new challenges to driving elements used to drive the optical components for optical performance adjustment (e.g., optical focus, optical image stabilization, etc.).

Specifically, existing driving elements for driving optical components are electromagnetic motors, such as Voice Coil Motors (VCM), Shape Memory Alloy Actuators (SMA), etc. However, as the size of optical components increases, resulting in an increase in weight, the existing electromagnetic motors are gradually unable to provide sufficient driving force to drive the optical components to move. Quantitatively, existing voice coil motors and shape memory alloy drivers are only suitable for driving an optical component with a weight less than 100 mg. That is, if the weight of the optical camera lens exceeds 100 mg, the existing drivers will not be able to meet the application requirements of camera modules.

In addition, as mobile terminal devices are becoming smaller and thinner, the density of component layout inside the driving element has also increased. Correspondingly, the existing voice coil motor is internally provided with a coil and magnets. When the distance between two magnets is too close (less than 7 mm), their internal magnetic fields will interact with each other, resulting in displacement or vibration of the magnets, and reducing the stability of its drive control.

Therefore, an adapted new driving solution for camera modules is needed. The new driver can not only meet the driving requirements of the camera module for optical performance adjustment, but also meet the development requirements of lightness and thinness of the camera module.

That is, for a camera module, a new driver needs to meet the following requirements: relatively larger driving force, and better driving performance (specifically including: higher accuracy driving control and longer driving stroke). At the same time, in addition to seeking a driver that meets the requirements of new technologies, when selecting a new driver, it is also necessary to consider that the selected driver can adapt to the current development trend of lightness and thinness of the camera module.

After research and testing, the present disclosure provides a piezoelectric actuator with a new structure, which can meet the technical requirements of the camera module for the driver. Moreover, the piezoelectric actuator is further arranged in the camera module in a suitable arrangement, so that it meets the structural and dimensional design requirements of the camera module.

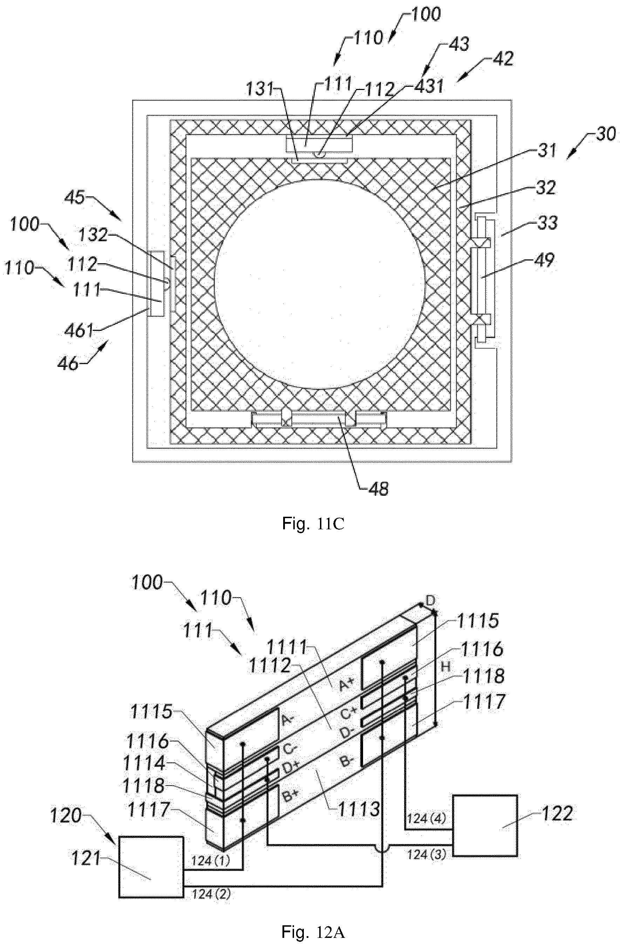

Figs. 12A to 12L illustrate schematic views of a piezoelectric actuator according to an embodiment of the application. As shown in Fig. 12A, the piezoelectric actuator 100 according to the embodiment of the present application includes an actuating system 110 and a driving circuit system 120, wherein the actuating system 110 moves in a two-dimensional trajectory along a preset direction in a manner of bending vibration along two directions under the control of the driving circuit system 120. In particular, in this embodiment, the piezoelectric actuator 100 is a high-efficiency semi-resonant driving system. After being turned on, the actuating system 110 of the piezoelectric actuator 100 moves in the two-dimensional trajectory along the preset direction in a manner of bending vibration along two directions to frictionally couple and move the acted object along the preset direction.

As shown in Fig. 12A, in this embodiment, the actuating system 110 includes a piezoelectric plate structure 111 and a friction driving portion 112 fixed to the piezoelectric plate structure 111. Here, the piezoelectric plate structure 111 may be symmetrical, or may also be asymmetrical. The piezoelectric plate structure 111 has a first side surface extending along its depth direction and a second side surface extending along its height direction and adjacent to the first side surface, wherein the piezoelectric plate structure 111 has a first resonance frequency along its depth direction (e.g., D as illustrated in Fig. 12A) and a second resonance frequency along its height direction (e.g., H as illustrated in Fig. 12A). Usually, the height dimension of the piezoelectric plate structure 111 is greater than its depth dimension, that is, the second resonance frequency is greater than the first resonance frequency.

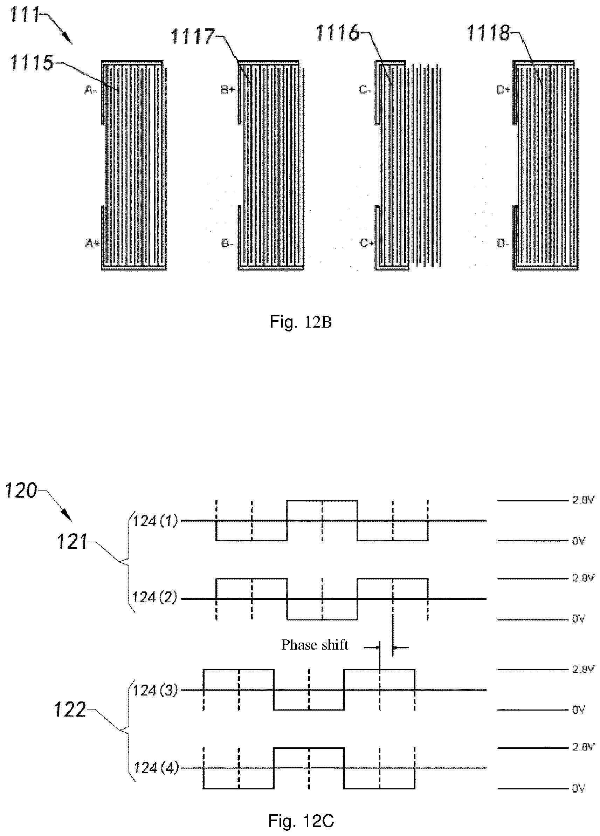

As shown in Fig. 12B, in this embodiment, the piezoelectric plate structure 111 includes at least one piezoelectric layer formed together. The thickness dimension of the piezoelectric plate structure 111 is in the range of 5 um to 40 um. In particular, in the embodiment of the present application, the at least one piezoelectric layer structure may be a single piezoelectric layer, or may also include a plurality of piezoelectric layers stacked together (for example, a plurality of parallel piezoelectric layers co-fired together). Here, compared with the single piezoelectric layer, the plurality of piezoelectric layers can achieve similar effects by applying a smaller voltage.

As shown in Fig. 12A, in this embodiment, the piezoelectric plate structure 111 includes a first piezoelectric region 1111, a second piezoelectric region 1112 and a third piezoelectric region 1113 formed on the second side surface, and a fourth piezoelectric region 1114 formed on the first side surface, wherein the second piezoelectric region 1112 is located between the first piezoelectric region 1111 and the third piezoelectric region 1113, and the fourth piezoelectric region 1114 is adjacent to the second piezoelectric region 1112. Moreover, the piezoelectric plate structure 111 further includes a first electrode pair 1115 electrically connected to the first piezoelectric region 1111, a second electrode pair 1116 electrically connected to the second piezoelectric region 1112, a third electrode pair 1117 electrically connected to the third piezoelectric region 1113 and a fourth electrode pair 1118 electrically connected to the fourth piezoelectric region 1114. That is, in the example illustrated in Fig. 9, the piezoelectric plate structure 111 includes 4 piezoelectric regions and four electrode pairs that are electrically connected to the 4 piezoelectric regions, respectively.

Moreover, in some other examples of the present application, one piezoelectric region of the first piezoelectric region 1111 and the third piezoelectric region 1113, and/or, one piezoelectric region of the second piezoelectric region 1112 and the fourth piezoelectric regions 1114 may be passive, which can reduce the driving amplitude without changing the operation of the actuating system 110.

Further, in the embodiment of the present application, the first piezoelectric region 1111, the second piezoelectric region 1112, the third piezoelectric region 1113 and the fourth piezoelectric region 1114 have polarities generated by polarization during the manufacturing process, thereby forming positive and negative electrodes. Specifically, the first piezoelectric region 1111 is polarized during the manufacturing process, so that one electrode of the first electrode pair 1115 corresponding to the first piezoelectric region 1111 forms a negative electrode (e.g., A- as illustrated in Fig. 12A), and the other electrode forms a positive electrode (e.g., A+ as illustrated in Fig. 12A); the third piezoelectric region 1113 is polarized during the manufacturing process, so that one electrode of the third electrode pair 1117 corresponding to the third piezoelectric region 1113 forms a negative electrode (e.g., B- as illustrated in Fig. 12A), and the other electrode forms a positive electrode (e.g., B+ as illustrated in Fig. 12A); the second piezoelectric region 1112 is polarized during the manufacturing process, so that one electrode of the second electrode pair 1116 corresponding to the second piezoelectric region 1112 forms a negative electrode (e.g., C-as illustrated in Fig. 12A), and the other electrode forms a positive electrode (e.g., C+ as illustrated in Fig. 12A); and the fourth piezoelectric region 1114 is polarized during the manufacturing process, so that one electrode of the fourth electrode pair 1118 corresponding to the fourth piezoelectric region 1114 forms a negative electrode (e.g., D-as illustrated in Fig. 12A), and the other electrode forms the positive electrode (e.g., D+ as illustrated in Fig. 12A). It should be noted that in this embodiment, each electrode in the first electrode pair 1115 and/or the second electrode pair 1116 and/or the third electrode pair 1117 and/or the second electrode pair 1116 has an "L" shape.

As shown in Figs. 12A and 12B, in this embodiment, one electrode of the first electrode pair 1115 is coupled to and alternatively connected to one internal electrode of each piezoelectric layer of the first piezoelectric region 1111, and the other electrode of the first electrode pair 1115 is alternatively connected to an internal electrode of the first piezoelectric region 1111 opposite to each piezoelectric layer, wherein during the polarization process, one electrode of the first electrode pair 1115 is determined as a positive electrode and the other is determined as a negative electrode. One electrode of the second electrode pair 1116 is coupled to and alternatively connected to an internal electrode of each piezoelectric layer of the second piezoelectric region 1112, and the other electrode of the second electrode pair 1116 is alternatively connected to an internal electrode of the second piezoelectric region 1112 opposite to each piezoelectric layer, wherein during the polarization process, one electrode of the second electrode pair 1116 is determined as a positive electrode and the other electrode is determined as a negative electrode. One electrode of the third electrode pair 1117 is coupled to and alternatively connected to an internal electrode of each piezoelectric layer of the third piezoelectric region 1113, and the other electrode of the third electrode pair 1117 is alternatively connected to an internal electrode of the third piezoelectric region 1113 opposite to each piezoelectric layer, wherein during the polarization process, one electrode of the third electrode pair 1117 is determined as a positive electrode and the other electrode is determined as a negative electrode. One electrode of the third electrode pair 1117 is coupled to and alternatively connected to an internal electrode of each piezoelectric layer of the third piezoelectric region 1113, and the other electrode of the third electrode pair 1117 is alternatively connected to an internal electrode of the third piezoelectric region 1113 opposite to each piezoelectric layer, wherein during the polarization process, one electrode of the third electrode pair 1117 is determined as a positive electrode and the other electrode is determined as a negative electrode.

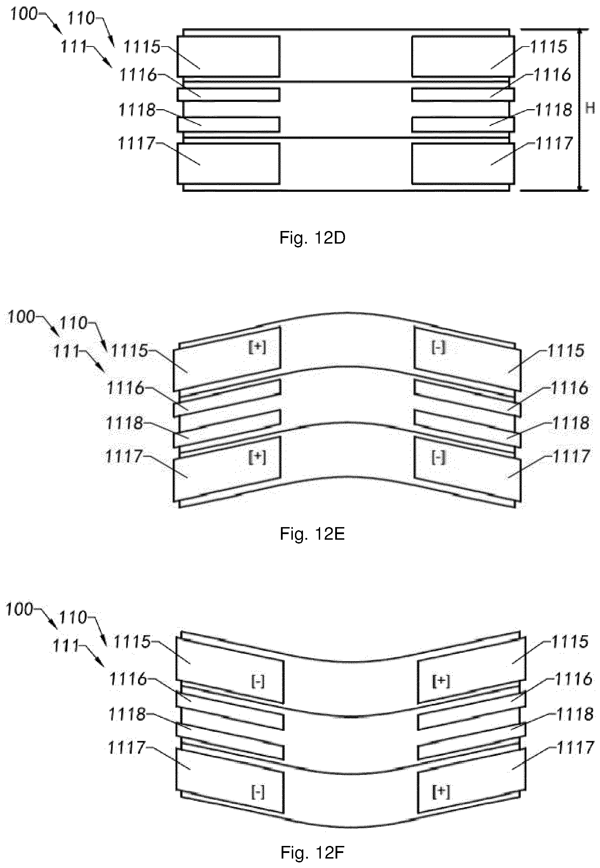

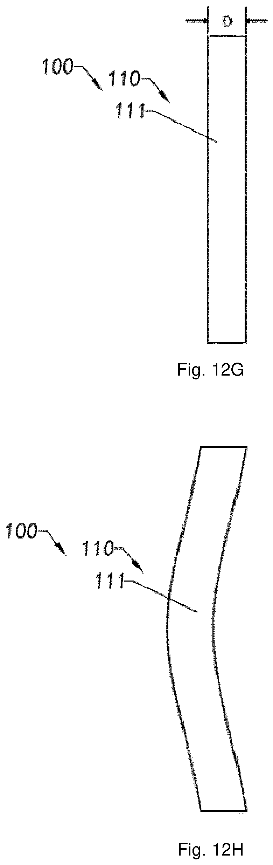

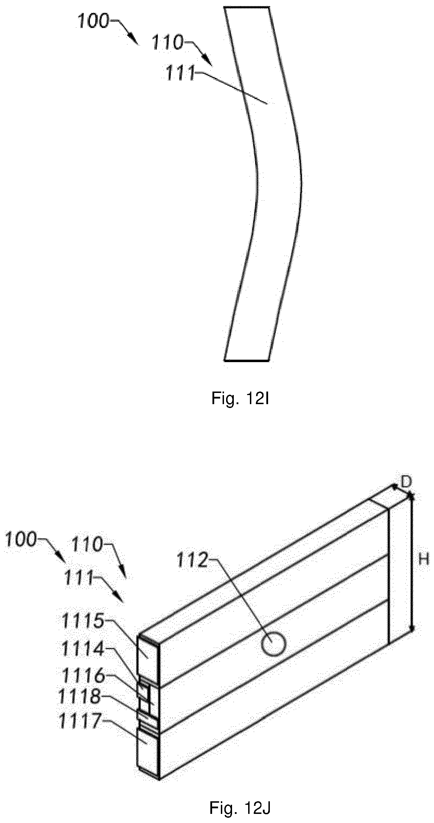

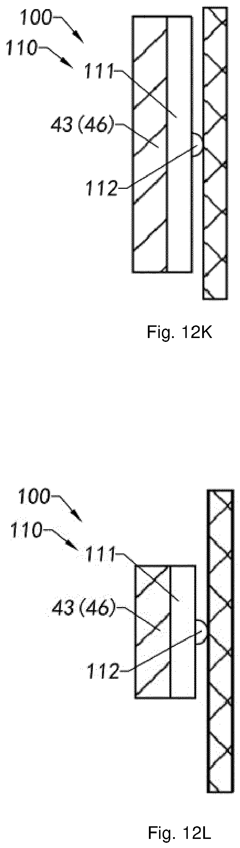

Further referring to Fig. 12A, in this embodiment, the driving circuit system 120 includes a first driving circuit 121 and a second driving circuit 122, the first driving circuit 121 is electrically connected to the first electrode pair 1115 and the third electrode pair 1117, and the second driving circuit 122 is electrically connected to the second electrode pair 1116 and the fourth electrode pair 1118, wherein the first driving circuit 121 and the second driving circuit 122 may be a full-bridge driving circuit, or may also be other driving circuits. In particular, in this embodiment, the driving circuit system 120 has four types of output circuit vibration signals: 124(1) to 124(4), wherein the output circuit vibration signal may be an ultrasonic square wave vibration signal as shown in Fig. 12, or may also be other signals, for example, a sinusoidal signal.

When the piezoelectric actuator 100 is working, the piezoelectric plate structure 111 has two bending modes: mode 1 and mode 2, wherein mode 1 and mode 2 each have a different resonance frequency. The vibration amplitude of the bending mode of the piezoelectric plate structure 111 depends on the vibration frequency of the output circuit vibration signal. Specifically, when the driving circuit system 120 applies a circuit vibration signal to the piezoelectric plate structure 111 at the resonance frequency of one of the two bending modes (for example, the resonance frequency of mode 1), the vibration amplitude is completely amplified for the bending mode operating at its resonance frequency and only partially amplified for the other bending mode operating at partial resonance. More clearly, when the vibration frequency of the circuit vibration signal output by the first driving circuit 121 is the first resonance frequency, the piezoelectric plate structure 111 resonates in its height direction and partially resonates in its depth direction, so that the piezoelectric plate structure 111 moves in a two-dimensional trajectory along a preset direction in a manner of bending vibration along two directions; and wherein when a vibration frequency of a circuit vibration signal input by the second driving circuit 122 is the second resonance frequency, the piezoelectric plate structure 111 resonates in its depth direction and partially resonates in its height direction, so that the piezoelectric plate structure 111 moves in a two-dimensional trajectory along a preset direction in a manner of bending vibration along two directions.

More specifically, in the example illustrated in Figs. 12A and 12C, the first driving circuit 121 and the second driving circuit 122 can output 4 types of circuit vibration signals: 124(1) to 124(4). In this embodiment, the voltage of the circuit vibration signal is 2.8 V, and the 4 vibration signals each have a vibration frequency, which is substantially equal to the resonance frequency of any one of the two bending modes of the piezoelectric plate structure 111. That is, the vibration frequency is substantially equal to the first resonance frequency or the second resonance frequency. In addition, the circuit vibration signals from outputs 124(1) to 124(2) are phase-shifted by the driving circuit system 120 by about 0 to 90 degrees relative to the circuit vibration signals from outputs 124(3) to 124(4), thereby moving along one of two directions. When the driving circuit system 120 adjusts the phase shift of outputs 124(1) to 124(2) relative to the outputs 124(3) to 124(4) to about -180 to -90 degrees, so as to move a movable member along an opposite direction (i.e., another opposite direction of the two directions).

Figs. 12D to 12F illustrate schematic views of the piezoelectric actuator 100 according to the embodiment of the present application moving in a first mode. As shown in Figs. 12D to 12F, the bending mode is generated due to the application of circuit vibration signals from outputs 124(1)-124(2) of different stages to the first piezoelectric region 1111 and the third piezoelectric region 1113 having opposite polarities. When the piezoelectricity of all electrodes is 0, Fig. 12D shows a situation when the piezoelectric plate structure 111 is stationary. When the voltage difference between outputs 124(1) and 124(2) is positive, the length of the first piezoelectric region 1111 increases and the length of the third piezoelectric region 1113 decreases so that the piezoelectric plate is bent as shown in Fig. 12E. When the voltage difference between outputs 124(1) and 124(2) is negative, the length of the first piezoelectric region 1111 decreases and the length of the third piezoelectric region 1113 increases so that the piezoelectric plate structure is bent as shown in Fig. 12F.

Figs. 12G to 12I illustrate schematic views of the piezoelectric actuator 100 according to the embodiment of the present application moving in a second mode.

As shown in Figs. 12G to 12I, the bending mode is generated due to the application of vibration signals from outputs 124(3)-124(4) of different stages to the second piezoelectric region 1112 and the fourth piezoelectric region 1114 having opposite polarities. When the piezoelectricity of all electrodes is 0, Fig. 12G shows a situation when the piezoelectric plate structure 111 is stationary. When the voltage difference between outputs 124(3) and 124(4) is positive, the length of the second piezoelectric region 1112 decreases and the length of the fourth piezoelectric region 1114 increases so that the piezoelectric plate structure 111 is bent as shown in Fig. 12H. When the voltage difference between outputs 124(3) and 124(4) is negative, the length of the second piezoelectric region 1112 increases and the length of the fourth piezoelectric region 1114 decreases so that the piezoelectric plate structure is bent as shown in Fig. 12I.

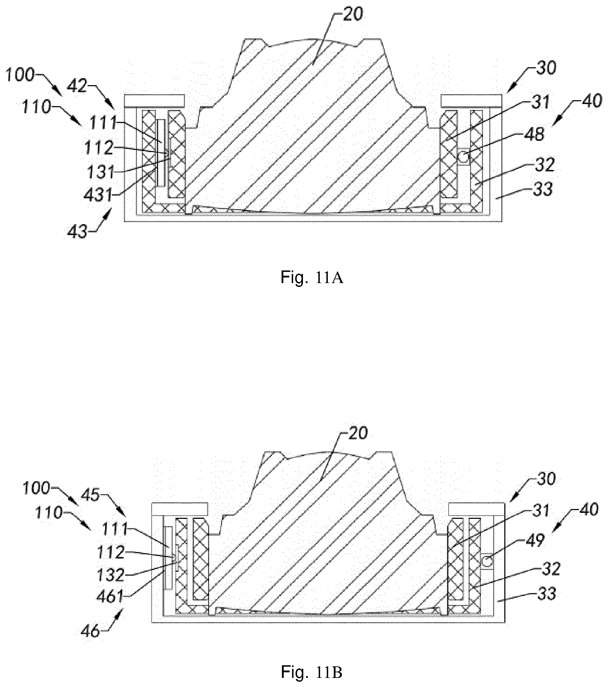

Correspondingly, when the output circuit vibration signal as shown in Fig. 11 is applied to the actuating system 110, the actuating system 110 forms a two-dimensional trajectory with an elliptical orbital shape, that is, the driving circuit system 120 can control, according to a phase difference, the direction of rotation of the actuating system 110 on the elliptical orbital path, so that the actuating system 110 cam drive the acted object at a relatively smaller and more precise step speed.

Fig. 12J illustrates another schematic view of the piezoelectric plate structure 111 of the piezoelectric actuator 100 according to the embodiment of the present application. As shown in Fig. 12J, in the embodiment of the present application, the actuating system 110 further includes a friction driving portion 112 fixed to the piezoelectric plate structure 111, wherein the friction driving portion 112 is suitable for being frictionally coupled to the acted object to move the acted object along a predetermined direction by friction. **In** order to enable the friction driving portion 112 to be frictionally coupled to the acted object, as shown in Fig. 12K, during the installation process, a prepressing component 43/46 is configured for the piezoelectric actuator 100, and the prepressing component 43/46 provides a prepressing force between the piezoelectric actuator 100 and the acted object, so that the friction driving portion 112 of the piezoelectric actuator 100 can be frictionally coupled to the acted object, so as to bring the acted object to move along a predetermined direction by friction, as shown in Fig. 12L.

**In** particular, in this embodiment, the friction driving portion 112 includes at least one contact pad, which may be fixed to the piezoelectric plate structure 111 along the depth direction, or may also be fixed to the piezoelectric plate structure 111 along the height direction. In this embodiment, the at least one contact pad may have a hemispherical shape. Of course, it may also be in other shapes, for example, a semi-cylindrical shape, a platform, a rectangle, or the like. Preferably, the at least one contact pad is made of a material with better friction performance and durability. For example, it may be made of a metal oxide material (for example, zirconia, alumina or the like).

It is worth mentioning that, compared with a traditional electromagnetic driver, the piezoelectric actuator 100 has the advantages of small size, large driving force and high accuracy. Quantitatively, the piezoelectric actuator 100 according to the embodiment of the present application can provide a driving force ranging from 0.6 N to 2 N, which is sufficient to drive a component with a weight more than 100 mg.

In addition to being able to provide a relatively large driving force, the piezoelectric actuator 100 also has other advantages over the traditional electromagnetic motor scheme and memory alloy motor scheme, including but not limited to: a relatively small size (with a slender shape), better response accuracy, a relatively simpler structure, relatively simpler driving control, high product consistency, no electromagnetic interference, a relatively larger stroke, short stabilization time, a relatively smaller weight, etc.

Specifically, the camera module requires that the configured driver has characteristics such as a long driving stroke and good alignment accuracy. In the existing voice coil motor scheme, in order to ensure the linearity of motion, it is necessary to design additional guide rods or ball guide rails; it is also necessary to adapt large-sized driving magnets/coils at the side part of the camera lens; and it is also necessary to set up auxiliary positioning devices such as balls, spring leaf, and suspension wires. In order to accommodate more components, ensure the structural strength and reserve structural gaps, it often leads to the larger lateral dimension of the module, the complicated structural design, and the heavier weight of the module. The memory alloy motor scheme is limited by the relatively small stroke that the memory alloy scheme can provide in the same proportion, and there are also reliability risks such as potential disconnection.

The piezoelectric actuator 100 has a relatively simple structure, and the assembly structure is simpler. In addition, the size of its elements is substantially unrelated to the size of the motion stroke of the piezoelectric actuator 100. Therefore, the piezoelectric actuator 100 can realize the advantages of large driving force, small size, and small weight in optical image stabilization products. Also, it is designed to match a larger stroke or a heavier component weight, and the integration degree in the design is also higher.

Further, the piezoelectric actuator 100 pushes the object to be pushed to perform micron-scale motion in a frictional contact manner. Compared with the non-contact manner of driving the object to be pushed in the electromagnetic scheme, in which it needs to rely on electromagnetic force to counteract gravity and frictional force, it has the advantages of greater driving force, greater displacement and lower power consumption, also has higher control accuracy, and can realize high-accuracy optical image stabilization. Moreover, when there are a plurality of motor mechanisms, the piezoelectric actuator 100 does not have a magnet coil structure, so there is no magnetic interference problem. In addition, the piezoelectric actuator 100 can be self-locked by relying on the frictional force between the components, and thus, the vibration and noise of the camera module during optical image stabilization can be reduced.

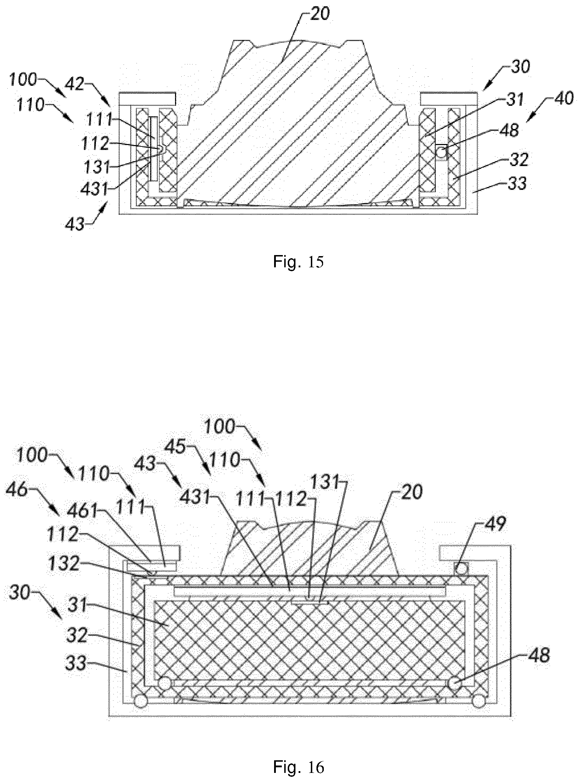

After the piezoelectric actuator 100 is selected as a driver to drive the photosensitive assembly 10 for optical image stabilization, specifically, as shown in Figs. 11A and 15, in this embodiment, the driving assembly 40 includes a first driving element 42, a first prepressing component 43, a second driving element 45, and a second prepressing component 46, wherein the first driving element 42 and the second driving element 45 are designed as the piezoelectric actuator 100.

Correspondingly, as shown in Figs. 11A and 15, in this embodiment, the optical camera lens 20 is mounted to the first frame carrier 31, the first driving element 42 is frictionally coupled to the first frame carrier 31 through the first prepressing component 43, and is configured to, after being driven, move along a first direction in a two-dimensional trajectory in a plane perpendicular to the optical axis in a manner of bending vibration along two directions, and thereby drive the first frame carrier 31 by friction, so as to bring the optical camera lens 20 to move in the plane perpendicular to the optical axis for optical image stabilization in the first direction. The second frame carrier 32 is externally arranged on the first frame carrier 31, wherein the second driving element 45 is frictionally coupled to the second frame carrier 32 through the second prepressing component 46, and is configured to, after being driven, move along a second direction in a two-dimensional trajectory in a plane perpendicular to the optical axis in a manner of bending vibration along two directions, and thereby drive the second frame carrier 32 by friction, so as to bring the first frame carrier 31 to bring the optical camera lens 20 to move in the plane perpendicular to the optical axis for optical image stabilization in a second direction, the first direction being perpendicular to the second direction. **In** one example, the first direction is an X-axis direction, and the second direction is a Y-axis direction.

Here, the first driving element 42 being frictionally coupled to the first frame carrier 31 includes: the first driving element 42 directly frictionally interacting with the first frame carrier 31, and the first driving element 42 indirectly frictionally interacting with the first frame carrier 31 (that is, although there is no direct friction force between the first driving element 42 and the first frame carrier 31, the friction driving force generated by the first driving element 42 can act on the first frame carrier 31). Correspondingly, the second driving element 45 being frictionally coupled between the second frame carrier 32 and the outer frame carrier 33 includes: the second driving element 45 directly frictionally interacting with the second frame carrier 32, and the second driving element 45 indirectly frictionally interacting with the second frame carrier 32 (that is, although there is no direct friction force between the second driving element 45 and the second frame carrier 32, the frictional driving force generated by the second driving element 44 can act on the second frame carrier 32)

More specifically, in this embodiment, as shown in Figs. 11A to 11C, the first driving element 42 is sandwiched between the first frame carrier 31 and the second frame carrier 32 through the first prepressing component 43. In this way, the first driving element 42 is frictionally coupled to the first frame carrier 31.

Correspondingly, in this embodiment, the first prepressing component 43 includes a first elastic element 431, and the first elastic element 431 is arranged between the piezoelectric plate structure 111 of the first driving element 42 and the second frame carrier 32, so as to force the first driving element 42 to be frictionally coupled to the first frame carrier 31 through an elastic force of the first elastic element 431. In this embodiment, the friction driving portion 112 of the first driving element 42 is directly in contact with the surface of the outer side wall of the first frame carrier 31, and correspondingly, the elastic force provided by the first elastic element 431 can force the friction driving portion 112 of the first driving element 42 to be in contact with the surface of the outer side wall of the first frame carrier 31 to form a frictional contact relationship between the two. In this way, after the first driving element 42 is turned on, the friction driving portion 112 of the first driving element 42 can drive the first frame carrier 31 to move along the first direction by means of friction driving, so as to bring the optical camera lens 20 to move along the first direction for optical image stabilization in the first direction.

In a specific example of the present application, the first elastic element 431 is designed as an adhesive having elasticity, that is, the first elastic element 431 is designed as glue having elasticity after being cured. Correspondingly, during the installation process, a layer of adhesive with a thickness of 10 um to 50 um may be applied between the surface of the inner side wall of the second frame carrier 32 and the piezoelectric plate structure 111 of the first driving element 42, so as to form the first elastic element 431 arranged between the piezoelectric plate structure 111 of the first driving element 42 and the second frame carrier 32 after the adhesive is cured and molded. It should be understood that, in this example, the first elastic element 431 can also enable the first driving element 42 to be fixed on the surface of the inner side wall of the second frame carrier 32 while providing the prepressing force. Preferably, the first elastic element 431 has relatively high flatness, that is, when applying the adhesive, it is ensured as much as possible that the applied adhesive has relatively high flatness and uniformity, and the use of an adhesive with a thickness of 10 um to 50 um can improve the flatness of the adhesive, so that the first driving element 42 can be flatly fixed on the surface of the inner side wall of the second frame carrier 32, thereby improving the driving stability of the first driving element 42.

Correspondingly, in this embodiment, as shown in Figs. 11A to 11C, the second driving element 45 is sandwiched between the second frame carrier 32 and the outer frame carrier 33 through the second prepressing component 46. **In** this way, the second driving element 45 is frictionally coupled to the second frame carrier 32.

Further, as shown in Figs. 11A to 11C, in this embodiment, the second prepressing component 46 includes a second elastic element 461, and the second elastic element 461 is arranged between the piezoelectric plate structure 111 of the second driving element 45 and the outer frame carrier 33, so as to force the second driving element 45 to be frictionally coupled to the second frame carrier 32 through an elastic force of the second elastic element 461. Correspondingly, in this embodiment, the friction driving portion 112 of the second driving element 45 is directly in contact with the surface of the outer side wall of the second frame carrier 32, and correspondingly, the elastic force provided by the second elastic element 461 can force the friction driving portion 112 of the second driving element 45 to be in contact with the surface of the outer side wall of the second frame carrier 32 to form a frictional contact relationship between the two. In this way, after the second driving element 45 is turned on, the friction driving portion 112 of the second driving element 45 can drive the second frame carrier 32 to move along the second direction by means of friction driving, so as to bring the optical camera lens 20 to move along the second direction for optical image stabilization in the second direction.

In a specific example of the present application, the second elastic element 461 is designed as an adhesive having elasticity, that is, the second elastic element 461 is designed as glue having elasticity after being cured. Correspondingly, during the installation process, a layer of adhesive with a thickness of 10 um to 50 um may be applied between the surface of the inner side wall of the outer frame carrier 33 and the piezoelectric plate structure 111 of the second driving element 45, so as to form the second elastic element 461 arranged between the piezoelectric plate structure 111 of the second driving element 45 and the outer frame carrier 33 after the adhesive is cured and molded. **It** should be understood that, in this example, the second elastic element 461 can also enable the second driving element 45 to be fixed on the surface of the inner side wall of the outer frame carrier 33 while providing the prepressing force. Preferably, the second elastic element 461 has relatively high flatness, that is, when applying the adhesive, it is ensured as much as possible that the applied adhesive has relatively high flatness and uniformity, and the use of an adhesive with a thickness of 10 um to 50 um can improve the flatness of the adhesive, so that the second driving element 45 can be flatly fixed on the surface of the inner side wall of the outer frame carrier 33, thereby improving the driving stability of the second driving element 45.

**It** is worth mentioning that, in other embodiments of the present application, the first elastic element 431 and the second elastic element 461 may also be designed as elastic elements without viscosity, for example, rubber with the inherent characteristic of elasticity in the material itself, or a spring or leaf spring that produces elasticity due to deformation, etc., which is also not limited in the present application.

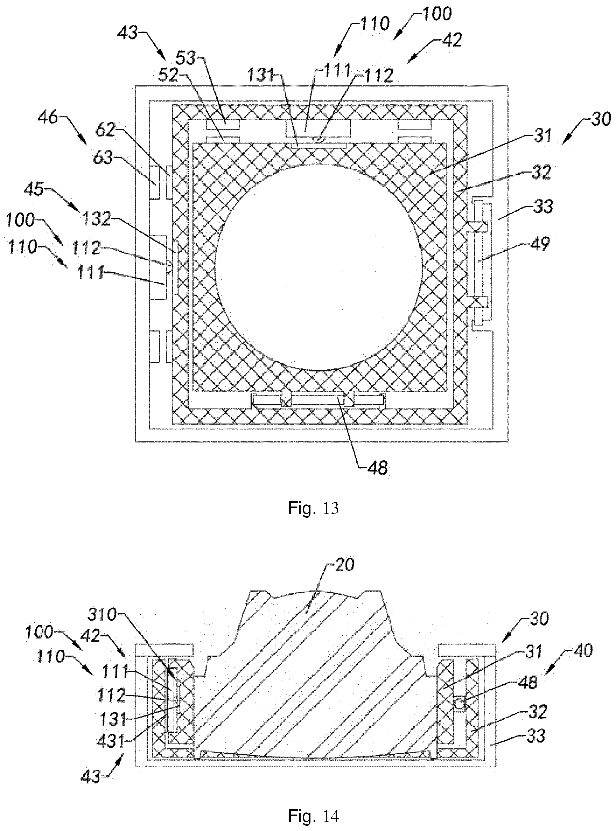

**It** is worth mentioning that, in other variant embodiments of the present application, the structural configuration of the first prepressing component 43 and the second prepressing component 46 may also be adjusted. Specifically, as shown in Fig. 13, in other examples of the present application, the first prepressing component 43 includes a first magnetic attraction element 52 arranged on the first frame carrier 31 and a second magnetic attraction element 53 arranged on the second frame carrier 44 and corresponding to the first magnetic attraction element 52, as so to force the first driving element 42 to be frictionally coupled to the first frame carrier 31 through an magnetic attraction action between the first magnetic attraction element 52 and the second magnetic attraction element 53.

Correspondingly, in this variant, the first magnetic attraction element 52 and the second magnetic attraction element 53 refer to magnetic attraction assemblies that can attract each other. For example, the first magnetic attraction element 52 may be designed as a magnet, and the second magnetic attraction element 53 may be designed as a magnetic component, for example, a material made of a metal such as iron, nickel, cobalt or the like. For another example, the first magnetic attraction element 52 may be designed as a magnet, and the second magnetic attraction element 53 may also be designed as a magnet.

The second prepressing component 46 includes a third magnetic attraction element 62 arranged on the second frame carrier 32 and a fourth magnetic attraction element 63 arranged on the outer frame carrier 33 and corresponding to the third magnetic attraction element 62, as so to force the second driving element 45 to be frictionally coupled to the second frame carrier 32 through an magnetic attraction action between the third magnetic attraction element 62 and the fourth magnetic attraction element 63.

In this variant, the third magnetic attraction element 62 and the fourth magnetic attraction element 63 refer to magnetic attraction assemblies that can attract each other. For example, the third magnetic attraction element 62 may be designed as a magnet, and the fourth magnetic attraction element 63 may be designed as a magnetic component, for example, a material made of a metal such as iron, nickel, cobalt or the like. For another example, the third magnetic attraction element 62 may be designed as a magnet, and the fourth magnetic attraction element 63 may also be designed as a magnet.

In order to enable the first driving element 42 and the second driving element 45 to drive the first frame carrier 31 and the second frame carrier 32 more smoothly, as shown in Figs. 11A to 11C, the driving assembly 40 further includes a first guiding mechanism 48 arranged between the first frame carrier 31 and the second frame carrier 32 and a second guiding mechanism 49 arranged between the second frame carrier and the outer frame carrier 33, wherein the first guiding mechanism 48 is configured to guide the first frame carrier 31 to move along the first direction, and the second guiding mechanism 49 is configured to guide the second frame carrier 32 to move along the second direction.

More specifically, as shown in Figs. 11A to 11C, in this embodiment, the first guiding mechanism 48 and the second guiding mechanism 49 are designed as guide rod structures. Correspondingly, the first guiding mechanism 48 includes a first guide rod arranged on the outer side wall of the first frame carrier 31 and extending along the first direction, wherein both ends of the first guide rod are fixed on the inner side wall of the second frame carrier 32. **In** particular, in this embodiment, the first guide rod and the first driving element 42 are oppositely arranged. Thus, after the first driving element 42 is turned on, the first frame carrier 31 is guided to move along the direction in which the first guide rod extends, so as to improve the movement stability of the first frame carrier 31.

Correspondingly, in this embodiment, the second guiding mechanism 49 includes a second guide rod arranged on the outer side wall of the second frame carrier 32 and extending along the second direction, wherein both ends of the second guide rod are fixed on the inner side wall of the outer frame carrier 33. **In** particular, in this embodiment, the second guide rod and the second driving element 45 are oppositely arranged. Thus, after the second driving element 45 is turned on, the second frame carrier 32 is guided to move along the direction in which the second guide rod extends, so as to improve the movement stability of the second frame carrier 32.

**It** is worth mentioning that, in other embodiments of the present application, the first guiding mechanism 48 and the second guiding mechanism 49 may also be realized based on other principles, for example, through a rolling ball-rolling groove mechanism, a slider-sliding groove mechanism, etc., which is not limited in the present application.

**In** order to optimize the driving performance of the first driving element 42 and the second driving element 45, in the embodiment of the present application, as shown in Figs. 11A to 11C, the driving assembly 40 further includes a first friction actuating portion 131 and a second friction actuating portion 132, wherein the first friction actuating portion 131 is arranged between the first driving element 42 and the first frame carrier 31, the friction driving portion 112 of the first driving element 42 is in contact with the first friction actuating portion 131 under the action of the first prepressing component 43, and the first friction actuating portion 131 is in contact with the surface of the outer side wall of the first frame carrier 31. In this way, the friction driving force provided by the first driving element 42 can act on the first frame carrier 31 through the first friction actuating portion 131, so as to bring the first frame carrier 31 and the optical camera lens 20 to move along the first direction. That is, in this variant embodiment, the prepressing force between the friction driving portion 112 of the first driving element 42 and the first frame carrier 31 is an indirect prepressing force, that is, although the friction driving portion 112 of the first driving element 42 is not in direct contact with the first frame carrier 31, there is still a prepressing force between the two, so that the friction driving portion 112 of the first driving element 42 can drive the first frame carrier 31 by means of friction driving.

Correspondingly, the second friction actuating portion 132 is arranged between the second driving element 45 and the second frame carrier 32, and the friction driving portion 112 of the second driving element 45 is in contact with the second friction actuating portion 132 under the action of the second prepressing component 46, and the second friction actuating portion 132 is in contact with the surface of the outer wall of the second frame carrier 32. In this way, the friction driving force provided by the second driving element 45 can act on the second frame carrier 32 via the second friction actuating portion 132, so as to bring the second frame carrier 32, the first frame carrier 31 and the optical camera lens 20 to move along the second direction for optical image stabilization in the second direction.

More specifically, as shown in Figs. 11A to 11C, in this embodiment, the first friction actuating portion 131 has a first surface and a second surface opposite to the first surface, wherein under the action of the first prepressing component 43, the first surface of the first friction actuating portion 131 is in contact with the surface of the outer side wall of the first frame carrier 31, and the second surface is in contact with the end face of at least one of the plurality of friction driving element 121 at the second end. In this way, the friction driving portion 112 of the first driving element 42 is in contact with the first friction actuating portion 131 and the first friction actuating portion 131 is in contact with the first frame carrier 31, so that the friction driving force provided by the first driving element 42 can act on the first frame carrier 31 via the first friction actuating portion 131. Correspondingly, the second friction actuating portion 132 has a third surface and a fourth surface opposite to the third surface, wherein under the action of the second prepressing component 46, the third surface of the second friction actuating portion 132 is in contact with the surface of the outer side wall of the second frame carrier 32, and the fourth surface is in contact with the end surface of at least one of the plurality of friction driving elements 121 at the second end. **In** this way, the friction driving portion 112 of the second driving element 45 is in contact with the second friction actuating portion 132 and the second friction actuating portion 132 is in contact with the second frame carrier 32, so that the friction driving force provided by the second driving element 45 can act on the second frame carrier 32 via the second friction actuating portion 132.

**It** is worth mentioning that, although in the embodiment illustrated in Figs. 11A to 11C, the first friction actuating portion 131 and the second friction actuating portion 132, as a separate component, are arranged between the first driving element 42 and the first frame carrier 31, and between the second driving element 45 and the second frame carrier 32, respectively, for example, the first friction actuating portion 131 is implemented is a separate component and is attached to the side surface of the first frame carrier 31, or, the second friction actuating portion 132 is designed as a separate component and is attached to the side surface of the second frame carrier 32. For another example, the first friction actuating portion 131 is designed as a coating coated on the side surface of the first frame carrier 31, or the second friction actuating portion 132 is designed as a coating coated on the side surface of the second frame carrier 32. **It** should be understood that, in other examples of the present application, the first friction actuating portion 131 may also be integrally formed on the surface of the outer side wall of the first frame carrier 31, that is, the first friction actuating portion 131 and the first frame carrier 31 has an integrated structure. Of course, in other examples of the present application, the second friction actuating portion 132 may also be integrally formed on the surface of the outer side wall of the second frame carrier 32, that is, the second friction actuating portion 132 and the second frame carrier 32 has an integrated structure.

Further, as shown in Figs. 9 and 11A to 11C, in the embodiment of the present application, the first frame carrier 31 has a first groove 310 recessedly formed on its surface, and the first friction actuating portion 131 is arranged in the first groove 310. Preferably, the shape and size of the first friction actuating portion 131 are adapted to those of the first groove 310, so that the first friction actuating portion 131 can be fittingly embedded into the first groove 310. Likewise, the second frame carrier 32 has a second groove 320 recessedly formed on its surface, and the second friction actuating portion 132 is arranged in the first groove 320. Preferably, the shape and size of the second friction actuating portion 132 are adapted to those of the second groove 320, so that the second friction actuating portion 132 can be fittingly embedded into the second groove 320.

Fig. 14 illustrates a schematic view of a variant of the camera module according to the embodiment of the present application. Compared with the example illustrated in Fig. 9, as shown in Fig. 14, in this variant embodiment, the first groove 310 has a relatively larger size, so that the first driving element 42 can be partially accommodated in the first groove 310. More specifically, in this variant embodiment, the shape of the first groove 310 is adapted to the shape of the first driving element 42, and the piezoelectric plate structure 111 of the first driving element 42 is suitable for being at least partially accommodated in the first groove. Thus, when the first driving element 42 drives the first frame carrier 31 in the first groove 310, the first groove 310 itself forms a guiding groove for guiding the movement of the first driving element 42. That is, in this variant embodiment, the first groove 310 not only provides an installation space for the installation of the first driving element 42, but also forms itself a guiding groove for guiding the movement of the first driving element 42 (in other words, regulating the movement of the first driving element 42).

Correspondingly, in this variant embodiment, the second groove 320 has a relatively larger size, so that the second driving element 45 can be partially accommodated in the second groove 320. More clearly, in this variant embodiment, the shape of the second groove 320 is adapted to the shape of the second driving element 45, and the piezoelectric plate structure 111 of the second driving element 45 is suitable for being at least partially accommodated in the first groove. Thus, when the second driving element 45 drives the first frame carrier 31 in the second groove 320, the second groove 320 itself forms a guiding groove for guiding the movement of the second driving element 45. That is, in this variant embodiment, the second groove 320 not only provides an installation space for the installation of the second driving element 45, but also forms a guiding groove for guiding the movement of the second driving element 45 (in other words, regulating the movement of the second driving element 45).

Likewise, when the second driving element 45 drives the second frame carrier 32 in the second groove 320, the second groove 320 itself forms a guiding groove for guiding the movement of the second frame carrier 32. That is, in this variant embodiment, the second groove 320 not only provides an installation space for the installation of the second driving element 45, but also itself forms a guiding structure for guiding the movement of the second frame carrier 32 (in other words, regulating the movement of the second driving element 45).

Fig. 15 illustrates a schematic view of still another variant of the camera module according to the embodiment of the present application. As shown in Fig. 15, in this variant embodiment, the first frame carrier 31 has a first groove 310 that is recessedly formed on its side surface and extends laterally, and the second frame carrier 32 has a second groove 320 that is recessedly formed on its side surface and extends laterally.

In particular, compared with the examples shown in Figs. 9 and 15, in this variant embodiment, the shape and size configuration of the first groove 310 and the second groove 320 are adjusted. Specifically, the size and shape of the first groove 310 are configured so that the friction driving portion 112 of the first driving element 42 can be embedded into the first groove 310. Meanwhile, the size and shape configuration of the second groove 320 are configured so that the friction driving portion 112 of the second driving element 45 can be embedded into the second groove 451. That is, in this embodiment, the first groove 310 not only forms an accommodating groove for accommodating the first friction actuating portion 131, but also forms a guiding groove for guiding a friction driving portion 112 of the first driving element 42; and the second groove 320 not only forms an accommodating groove for accommodating the second friction actuating portion 132, but also forms a guiding groove for guiding the friction driving portion 112 of the second driving element 45.

Moreover, in this variant embodiment, the first groove 441 has a reduced opening size, and/or, the second groove 320 has a reduced opening size. That is, in this variant embodiment, the opening size of the first groove 310 gradually decreases along the width direction of the first frame carrier 31 toward the direction away from the first driving element 42, and the opening size of the second groove 45 gradually decreases along the width direction of the second frame carrier 32 toward the direction away from the second driving element 45.

It should be understood that after the first driving element 42 and the second driving element 45 operate for a period of time, the friction driving portions 112 of the first driving element 42 and the second driving element 45 may wear out. Correspondingly, under the action of the first prepressing component 43 and the second prepressing component 46, the friction driving portion 112 of the first driving element 42 may extend further inwards to the first groove 310, the friction driving portion 112 of the second driving element 45 may extend further inwards to the second groove 320. Thus, since the first groove 310 has the reduced opening size and the second groove 320 has the reduced opening size, the friction driving portion 112 of the first driving element 42 can again be abutted against the first friction actuating portion 131 arranged in the first groove 310, and the friction driving portion 112 of the second driving element 45 can again be abutted against the second friction actuating portion 132 arranged in the second groove 320. In this way, the service life of the first driving element 42 and the second driving element 45 can be extended, that is, the service life of the camera module can be extended.

Fig. 16 illustrates a schematic view of still another variant of the camera module according to the embodiment of the present application. Compared with the example illustrated in Fig. 9, in this variant embodiment, the arrangement of the first driving element 42 and the second driving element 45 is adjusted.

Specifically, in the example illustrated in Fig. 9, the first driving element 42 is located on the side part of the first frame carrier 31, and the second driving element 45 is located on the side part of the second frame carrier 32. In contrast, as shown in Fig. 16, in this variant embodiment, the first driving element 42 is located on the upper part of the first frame carrier 31, and the second driving element 45 is located on the upper part of the second frame carrier 32.

In a specific example of this variant, the first driving element 42 is sandwiched between the first frame carrier 31 and the second frame carrier 32 up and down through the first prepressing component 43. In this way, the first driving element 42 is frictionally coupled to the first frame carrier 31. The second driving element 45 is sandwiched between the second frame carrier 32 and the outer frame carrier 33 up and down through the second prepressing component 46. In this way, the second driving element 45 is frictionally coupled to the second frame carrier 32.

Correspondingly, the driving assembly 40 further includes a first guiding mechanism 48 arranged between the first frame carrier 31 and the second frame carrier 32, and a second guiding mechanism 49 arranged between the second frame carrier 32 and the outer frame carrier 33. However, unlike the example illustrated in Figs. 10 and 15, in this variant embodiment, the first guiding mechanism 48 and the second guiding mechanism 49 are designed as a rolling ball-rolling groove mechanism, as shown in Fig. 16.

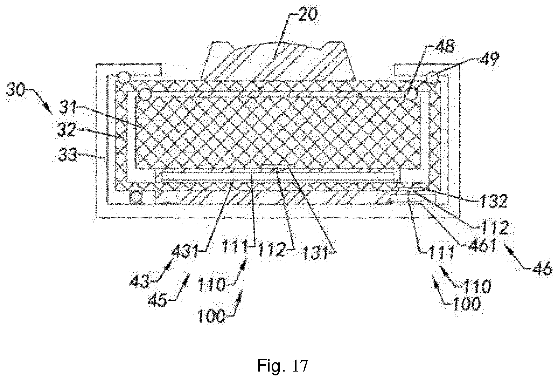

Fig. 17 illustrates a schematic view of still another variant of the camera module according to the embodiment of the present application. Compared with the example illustrated in Fig. 9, in this variant embodiment, the arrangement of the first driving element 42 and the second driving element 45 is adjusted again.

Specifically, as shown in Fig. 17, in this variant embodiment, the first driving element 42 is located on the lower part of the first frame carrier 31, and the second driving element 45 is located on the lower part of the second frame carrier 32.

In a specific example of this variant, the first driving element 42 is sandwiched between the first frame carrier 31 and the second frame carrier 32 up and down through the first prepressing component 43. In this way, the first driving element 42 is frictionally coupled to the first frame carrier 31. The second driving element 45 is sandwiched between the second frame carrier 32 and the outer frame carrier 33 up and down through the second prepressing component 46. In this way, the second driving element 45 is frictionally coupled to the second frame carrier 32.

Correspondingly, the driving assembly 40 further includes a first guiding mechanism 48 arranged between the first frame carrier 31 and the second frame carrier 32, and a second guiding mechanism 49 arranged between the second frame carrier 32 and the outer frame carrier 33. However, unlike the example illustrated in Figs. 11 and 15, in this variant embodiment, the first guiding mechanism 48 and the second guiding mechanism 49 are designed as a rolling ball-rolling groove mechanism, as shown in Fig. 17.

In summary, the camera module based on the embodiment of the present application is explained, wherein the camera module adopts the piezoelectric actuator 100 as a driver, which can not only meet the driving requirements of the camera module for optical performance adjustment, but also meet the development demands of the camera module for lightness and thinness.

Although the camera module is a traditional upright camera module as an example in the embodiment of the present application, it should be understood by those of ordinary skill in the art that the piezoelectric actuator 100 according to the embodiment of the present application may also be used as a driver in a periscope camera module, which is not limited in the present application.

It should be understood by those skilled in the art that the embodiments of the present disclosure shown in the above description and the drawings are only used as examples and do not limit the present disclosure. The objects of the present invention have been fully and effectively achieved.

## Claims

1. A camera module, comprising:
a photosensitive assembly (10), comprising a circuit board (11) and a photosensitive chip (12) electrically connected to the circuit board (11);
a frame carrier assembly (30) mounted on the photosensitive assembly (10), wherein the frame carrier assembly (30) comprises a first frame carrier (31, 41);
an optical camera lens (20) held on a photosensitive path of the photosensitive assembly (10) by being mounted in the first frame carrier (31), wherein the optical camera lens (20) is provided with an optical axis; and
a driving assembly, **characterized by** comprising a first driving element (42) and a first prepressing component (43), wherein the first driving element (42) is designed as a piezoelectric actuator, wherein the first driving element (42) is frictionally coupled to the first frame carrier (31) through the first prepressing component (43), and is configured to, after being driven, move in a two-dimensional trajectory in a plane perpendicular to the optical axis in a manner of bending vibration along two directions, and thereby drive the first frame carrier (31) by friction, so as to bring the optical camera lens (20) to move in a first direction perpendicular to the optical axis;
wherein the actuating system (110) comprises a piezoelectric plate structure (111) and a friction driving portion (112) fixed to the piezoelectric plate structure (111);
wherein the piezoelectric plate structure (111) comprises a first piezoelectric region (1111), a second piezoelectric region (1112) and a third piezoelectric region (1113) formed on the second side surface, and a fourth piezoelectric region (1114) formed on the first side surface, wherein the second piezoelectric region (1112) is located between the first piezoelectric region (1111) and the third piezoelectric region (1113), and the fourth piezoelectric region (1114) is adjacent to the second piezoelectric region (1112); and wherein the piezoelectric plate structure (111) further comprises a first electrode pair (1115) electrically connected to the first piezoelectric region (1111), a second electrode pair (1116) electrically connected to the second piezoelectric region (1112), a third electrode pair (1117) electrically connected to the third piezoelectric region (1113), and a fourth electrode pair (1118) electrically connected to the fourth piezoelectric region (1114).

2. The camera module according to claim 1, wherein the frame carrier assembly (30) further comprises a second frame carrier (32, 44) externally arranged on the first frame carrier (31) and an outer frame carrier externally arranged on the second frame carrier (32), wherein the driving assembly further comprises a second driving element (45) and a second prepressing component, wherein the second driving element (45) is frictionally coupled to the second frame carrier (32) through the second prepressing component, and is configured to, after being driven, move in a two-dimensional trajectory in a plane perpendicular to the optical axis in a manner of bending vibration along two directions, and thereby drive the second frame carrier (32) by friction, so as to bring the first frame carrier (31) to bring the optical camera lens (20) to move in a second direction perpendicular to the optical axis, the second direction being perpendicular to the first direction.

3. The camera module according to claim 2, wherein both the first driving element (42) and the second driving element (45) are designed as a piezoelectric actuator, respectively, and the piezoelectric actuator comprises an actuating system and a driving circuit system, wherein the actuating system moves in a two-dimensional trajectory along a preset direction in a manner of bending vibration along two directions under the control of the driving circuit system.

4. The camera module according to claim 3, wherein the friction driving portion is frictionally coupled to the first frame carrier (31) or the second frame carrier (32), wherein the piezoelectric plate structure (111) has a first side surface extending along its depth direction (D) and a second side surface extending along its height direction (H) and adjacent to the first side surface, wherein both the depth direction and the height direction are perpendicular to the optical axis, and the depth direction is perpendicular to the height direction, wherein the piezoelectric plate structure (111) has a first resonance frequency along its depth direction and a second resonance frequency along its height direction, and wherein the second resonance frequency is greater than the first resonance frequency.

5. The camera module according to claim 4, wherein the driving circuit system (120) comprises a first driving circuit (121) and a second driving circuit (122), the first driving circuit (121) is electrically connected to the first electrode pair (1115) and the third electrode pair (1117), and the second driving circuit (122) is electrically connected to the second electrode pair (1116) and the fourth electrode pair (1118); and wherein vibration frequencies of circuit vibration signals output by the first driving circuit (121) and the second driving circuit (122) are equal to the first resonance frequency or the second resonance frequency.

6. The camera module according to claim 5, wherein when the vibration frequency of the circuit vibration signal output by the first driving circuit (121) is the first resonance frequency, the piezoelectric plate structure (111) resonates in its height direction and partially resonates in its depth direction, so that the piezoelectric plate structure (111) moves in a two-dimensional trajectory along a preset direction in a manner of bending vibration along two directions; and wherein when a vibration frequency of a circuit vibration signal input by the second driving circuit (122) is the second resonance frequency, the piezoelectric plate structure (111) resonates in its depth direction and partially resonates in its height direction, so that the piezoelectric plate structure (111) moves in a two-dimensional trajectory along a preset direction in a manner of bending vibration along two directions.

7. The camera module according to claim 6, wherein the driving assembly further comprises a first friction actuating portion and a second friction actuating portion, and the first friction actuating portion is sandwiched between a friction driving portion (112) of the first driving element (42) and the first frame carrier (31), so that the first driving element (42) is frictionally coupled to the first frame carrier (31) through the first friction actuating portion and the first prepressing component (43); and the second friction actuating portion is sandwiched between a friction driving portion (112) of the second driving element (45) and the second frame carrier (32), so that the second driving element (45) is frictionally coupled to the second frame carrier (32) through the second prepressing component and the second friction actuating portion.

8. The camera module according to claim 7, wherein the first driving element (42) is located on a side part of the first frame carrier (31) which extends parallel to the optical axis, or the first driving element (42) is located on an upper part of the first frame carrier (31) which is an upper side of the first frame carrier (31) and extends perpendicular to the optical axis, or
the first driving element (42) is located on a lower part of the first frame carrier (31) which is a lower side of the first frame carrier (31) and extends perpendicular to the optical axis.

9. The camera module according to claim 7, wherein the first driving element (42) is located on a side part of the first frame carrier (31) which extends parallel to the optical axis, wherein the second driving element (45) is sandwiched between the second frame carrier (32) and the outer frame carrier through the second prepressing component and the second friction actuating portion, so that the second driving element (45) is frictionally coupled to the second frame carrier (32), and wherein the second driving element (45) is located on a side part of the second frame carrier (32) which extends parallel to the optical axis.

10. The camera module according to claim 7wherein the first driving element (42) is located on an upper part of the first frame carrier (31) is an upper side of the first frame carrier (31) and extends perpendicular to the optical axis, wherein the second driving element (45) is sandwiched between the second frame carrier (32) and the outer frame carrier through the second prepressing component and the second friction actuating portion, so that the second driving element (45) is frictionally coupled to the second frame carrier (32), and wherein the second driving element (45) is located on an upper part of the second frame carrier (32) which is upper side of the second frame carrier (32) and extends perpendicular to the optical axis.

11. The camera module according to claim 9, wherein the first prepressing component (43) comprises a first elastic element, and the first elastic element is arranged between the piezoelectric plate structure (111) of the first driving element (42) and the second frame carrier (32), so as to force the friction driving portion (112) of the first driving element (42) to be abutted against the first friction actuating portion by means of an elastic force of the first elastic element, so that the first driving element (42) is frictionally coupled to the first frame carrier (31); and the second prepressing element comprises a second elastic element, and the second elastic element is arranged between the piezoelectric plate structure (111) of the second driving element (45) and the outer frame carrier, so as to force the friction driving portion (112) of the second driving element (45) to be abutted against the second friction actuating portion by means of an elastic force of the second elastic element, so that the second driving element (45) is frictionally coupled to the second frame carrier (32).

12. The camera module according to claim 11, wherein the first elastic element and the second elastic element are designed as adhesives having elasticity, wherein thickness dimensions of the first elastic element and the second elastic element are between 10 um and 50 um.

13. The camera module according to claim 9, wherein the first prepressing component (43) comprises a first magnetic attraction element arranged on the first frame carrier (31) and a second magnetic attraction element arranged on the second frame carrier (32) and corresponding to the first magnetic attraction element, so as to force the friction driving portion (112) of the first driving element (42) to be abutted against the first friction actuating portion by means of a magnetic attraction effect between the first magnetic attraction element and the second magnetic attraction element, so that the first driving element (42) is frictionally coupled to the first frame carrier (31); and the second prepressing component comprises a third magnetic attraction element arranged on the second frame carrier (32) and a fourth magnetic attraction element arranged on the outer frame carrier and corresponding to the third magnetic attraction element, so as to force the friction driving portion (112) of the second driving element (45) to be abutted against the second friction actuating portion by means of a magnetic attraction effect between the third magnetic attraction element and the fourth magnetic attraction element, so that the second driving element (45) is frictionally coupled to the second frame carrier (32).

14. The camera module according to claim 7, wherein the first frame carrier (31) comprises a first groove recessedly formed on its surface, and the first friction actuating portion is arranged in the first groove, wherein the first groove forms a guiding groove for guiding the first driving element (42), wherein the second frame carrier (32) comprises a second groove recessedly formed on its surface, and the second friction actuating portion is arranged in the second groove, wherein the second groove forms a guiding groove for guiding the second driving element (45), wherein the first groove has a reduced opening size gradually decreases along the width direction (D) of the first frame carrier (31) toward the direction away from the first driving element (42), and/or the second groove has a reduced opening size gradually decreases along the width (D) direction of the second frame carrier (32) toward the direction away from the second driving element (45).

15. The camera module according to claim 7, wherein the driving assembly further comprises a first guiding mechanism arranged between the first frame carrier (31) and the second frame carrier (32), and a second guiding mechanism arranged between the second frame carrier (32) and the outer frame carrier.

## Patentansprüche

1. Kameramodul, umfassend:
eine lichtempfindliche Anordnung (10), umfassend eine Leiterplatte (11) und einen lichtempfindlichen Chip (12), der elektrisch mit der Leiterplatte (11) verbunden ist;
eine Rahmenträgeranordnung (30), die an der lichtempfindlichen Anordnung (10) montiert ist, wobei die Rahmenträgeranordnung (30) einen ersten Rahmenträger (31, 41) umfasst;
eine optische Kameralinse (20), die auf einem lichtempfindlichen Pfad der lichtempfindlichen Anordnung (10) gehalten wird, indem sie in dem ersten Rahmenträger (31) montiert ist, wobei die optische Kameralinse (20) mit einer optischen Achse versehen ist; und
eine Antriebsanordnung, **dadurch gekennzeichnet, dass** sie ein erstes Antriebselement (42) und eine erste Vorspannkomponente (43) umfasst, wobei das erste Antriebselement (42) als ein piezoelektrischer Aktor ausgebildet ist, wobei das erste Antriebselement (42) durch die erste Vorspannkomponente (43) reibschlüssig mit dem ersten Rahmenträger (31) gekoppelt ist und dazu ausgebildet ist, sich, nachdem es angetrieben wurde, in einer zweidimensionalen Bahn in einer Ebene senkrecht zu der optischen Achse in einer Art von Biegeschwingung entlang zweier Richtungen zu bewegen und dadurch den ersten Rahmenträger (31) durch Reibung anzutreiben, um die optische Kameralinse (20) dazu zu bringen, sich in einer ersten Richtung senkrecht zu der optischen Achse zu bewegen;
wobei das Betätigungssystem (110) eine piezoelektrische Plattenstruktur (111) und einen Reibungsantriebsabschnitt (112) umfasst, der an der piezoelektrischen Plattenstruktur (111) befestigt ist;
wobei die piezoelektrische Plattenstruktur (111) eine erste piezoelektrische Region (1111), eine zweite piezoelektrische Region (1112) und eine dritte piezoelektrische Region (1113), die auf der zweiten Seitenfläche gebildet sind, und eine vierte piezoelektrische Region (1114), die auf der ersten Seitenfläche gebildet ist, umfasst, wobei die zweite piezoelektrische Region (1112) zwischen der ersten piezoelektrischen Region (1111) und der dritten piezoelektrischen Region (1113) angeordnet ist und die vierte piezoelektrische Region (1114) benachbart zu der zweiten piezoelektrischen Region (1112) ist; und wobei die piezoelektrische Plattenstruktur (111) ferner ein erstes Elektrodenpaar (1115), das elektrisch mit der ersten piezoelektrischen Region (1111) verbunden ist, ein zweites Elektrodenpaar (1116), das elektrisch mit der zweiten piezoelektrischen Region (1112) verbunden ist, ein drittes Elektrodenpaar (1117), das elektrisch mit der dritten piezoelektrischen Region (1113) verbunden ist, und ein viertes Elektrodenpaar (1118) umfasst, das elektrisch mit der vierten piezoelektrischen Region (1114) verbunden ist.

2. Kameramodul nach Anspruch 1, wobei die Rahmenträgeranordnung (30) ferner einen zweiten Rahmenträger (32, 44), der außen an dem ersten Rahmenträger (31) angeordnet ist, und einen äußeren Rahmenträger umfasst, der außen an dem zweiten Rahmenträger (32) angeordnet ist, wobei die Antriebsanordnung ferner ein zweites Antriebselement (45) und eine zweite Vorspannkomponente umfasst, wobei das zweite Antriebselement (45) durch die zweite Vorspannkomponente reibschlüssig mit dem zweiten Rahmenträger (32) gekoppelt ist und dazu ausgebildet ist, sich, nachdem es angetrieben wurde, in einer zweidimensionalen Bahn in einer Ebene senkrecht zu der optischen Achse in einer Art von Biegeschwingung entlang zweier Richtungen zu bewegen und dadurch den zweiten Rahmenträger (32) durch Reibung anzutreiben, um den ersten Rahmenträger (31) dazu zu bringen, die optische Kameralinse (20) dazu zu bringen, sich in einer zweiten Richtung senkrecht zu der optischen Achse zu bewegen, wobei die zweite Richtung senkrecht zu der ersten Richtung ist.

3. Kameramodul nach Anspruch 2, wobei sowohl das erste Antriebselement (42) als auch das zweite Antriebselement (45) jeweils als ein piezoelektrischer Aktor ausgebildet sind und der piezoelektrische Aktor ein Betätigungssystem und ein Antriebsschaltungssystem umfasst, wobei sich das Betätigungssystem unter der Steuerung des Antriebsschaltungssystems in einer zweidimensionalen Bahn entlang einer voreingestellten Richtung in einer Art von Biegeschwingung entlang zweier Richtungen bewegt.

4. Kameramodul nach Anspruch 3, wobei der Reibungsantriebsabschnitt reibschlüssig mit dem ersten Rahmenträger (31) oder dem zweiten Rahmenträger (32) gekoppelt ist, wobei die piezoelektrische Plattenstruktur (111) eine erste Seitenfläche, die sich entlang ihrer Tiefenrichtung (D) erstreckt, und eine zweite Seitenfläche aufweist, die sich entlang ihrer Höhenrichtung (H) erstreckt und benachbart zu der ersten Seitenfläche ist, wobei sowohl die Tiefenrichtung als auch die Höhenrichtung senkrecht zu der optischen Achse sind und die Tiefenrichtung senkrecht zu der Höhenrichtung ist, wobei die piezoelektrische Plattenstruktur (111) eine erste Resonanzfrequenz entlang ihrer Tiefenrichtung und eine zweite Resonanzfrequenz entlang ihrer Höhenrichtung aufweist und wobei die zweite Resonanzfrequenz größer als die erste Resonanzfrequenz ist.

5. Kameramodul nach Anspruch 4, wobei das Antriebsschaltungssystem (120) eine erste Antriebsschaltung (121) und eine zweite Antriebsschaltung (122) umfasst, die erste Antriebsschaltung (121) elektrisch mit dem ersten Elektrodenpaar (1115) und dem dritten Elektrodenpaar (1117) verbunden ist und die zweite Antriebsschaltung (122) elektrisch mit dem zweiten Elektrodenpaar (1116) und dem vierten Elektrodenpaar (1118) verbunden ist; und wobei Vibrationsfrequenzen von Schaltungsvibrationssignalen, die von der ersten Antriebsschaltung (121) und der zweiten Antriebsschaltung (122) ausgegeben werden, gleich der ersten Resonanzfrequenz oder der zweiten Resonanzfrequenz sind.

6. Kameramodul nach Anspruch 5, wobei, wenn die Vibrationsfrequenz des Schaltungsvibrationssignals, das von der ersten Antriebsschaltung (121) ausgegeben wird, die erste Resonanzfrequenz ist, die piezoelektrische Plattenstruktur (111) in ihrer Höhenrichtung resoniert und teilweise in ihrer Tiefenrichtung resoniert, so dass sich die piezoelektrische Plattenstruktur (111) in einer zweidimensionalen Bahn entlang einer voreingestellten Richtung in einer Art von Biegeschwingung entlang zweier Richtungen bewegt; und wobei, wenn eine Vibrationsfrequenz eines Schaltungsvibrationssignals, das von der zweiten Antriebsschaltung (122) eingegeben wird, die zweite Resonanzfrequenz ist, die piezoelektrische Plattenstruktur (111) in ihrer Tiefenrichtung resoniert und teilweise in ihrer Höhenrichtung resoniert, so dass sich die piezoelektrische Plattenstruktur (111) in einer zweidimensionalen Bahn entlang einer voreingestellten Richtung in einer Art von Biegeschwingung entlang zweier Richtungen bewegt.

7. Kameramodul nach Anspruch 6, wobei die Antriebsanordnung ferner einen ersten Reibungsbetätigungsabschnitt und einen zweiten Reibungsbetätigungsabschnitt umfasst und der erste Reibungsbetätigungsabschnitt zwischen einem Reibungsantriebsabschnitt (112) des ersten Antriebselements (42) und dem ersten Rahmenträger (31) eingeschlossen ist, so dass das erste Antriebselement (42) durch den ersten Reibungsbetätigungsabschnitt und die erste Vorspannkomponente (43) reibschlüssig mit dem ersten Rahmenträger (31) gekoppelt ist; und der zweite Reibungsbetätigungsabschnitt zwischen einem Reibungsantriebsabschnitt (112) des zweiten Antriebselements (45) und dem zweiten Rahmenträger (32) eingeschlossen ist, so dass das zweite Antriebselement (45) durch die zweite Vorspannkomponente und den zweiten Reibungsbetätigungsabschnitt reibschlüssig mit dem zweiten Rahmenträger (32) gekoppelt ist.

8. Kameramodul nach Anspruch 7, wobei das erste Antriebselement (42) an einem Seitenteil des ersten Rahmenträgers (31) angeordnet ist, das sich parallel zu der optischen Achse erstreckt, oder
wobei das erste Antriebselement (42) an einem oberen Teil des ersten Rahmenträgers (31) angeordnet ist, der eine obere Seite des ersten Rahmenträgers (31) ist und sich senkrecht zu der optischen Achse erstreckt, oder
wobei das erste Antriebselement (42) an einem unteren Teil des ersten Rahmenträgers (31) angeordnet ist, der eine untere Seite des ersten Rahmenträgers (31) ist und sich senkrecht zu der optischen Achse erstreckt.

9. Kameramodul nach Anspruch 7, wobei das erste Antriebselement (42) an einem Seitenteil des ersten Rahmenträgers (31) angeordnet ist, das sich parallel zu der optischen Achse erstreckt, wobei das zweite Antriebselement (45) durch die zweite Vorspannkomponente und den zweiten Reibungsbetätigungsabschnitt zwischen dem zweiten Rahmenträger (32) und dem äußeren Rahmenträger eingeschlossen ist, so dass das zweite Antriebselement (45) reibschlüssig mit dem zweiten Rahmenträger (32) gekoppelt ist, und wobei das zweite Antriebselement (45) an einem Seitenteil des zweiten Rahmenträgers (32) angeordnet ist, das sich parallel zu der optischen Achse erstreckt.

10. Kameramodul nach Anspruch 7, wobei das erste Antriebselement (42) an einem oberen Teil des ersten Rahmenträgers (31) angeordnet ist, der eine obere Seite des ersten Rahmenträgers (31) ist und sich senkrecht zu der optischen Achse erstreckt, wobei das zweite Antriebselement (45) durch die zweite Vorspannkomponente und den zweiten Reibungsbetätigungsabschnitt zwischen dem zweiten Rahmenträger (32) und dem äußeren Rahmenträger eingeschlossen ist, so dass das zweite Antriebselement (45) reibschlüssig mit dem zweiten Rahmenträger (32) gekoppelt ist, und wobei das zweite Antriebselement (45) an einem oberen Teil des zweiten Rahmenträgers (32) angeordnet ist, der eine obere Seite des zweiten Rahmenträgers (32) ist und sich senkrecht zu der optischen Achse erstreckt.

11. Kameramodul nach Anspruch 9, wobei die erste Vorspannkomponente (43) ein erstes elastisches Element umfasst und das erste elastische Element zwischen der piezoelektrischen Plattenstruktur (111) des ersten Antriebselements (42) und dem zweiten Rahmenträger (32) angeordnet ist, um den Reibungsantriebsabschnitt (112) des ersten Antriebselements (42) mittels einer elastischen Kraft des ersten elastischen Elements dazu zu zwingen, gegen den ersten Reibungsbetätigungsabschnitt angelegt zu werden, so dass das erste Antriebselement (42) reibschlüssig mit dem ersten Rahmenträger (31) gekoppelt ist; und das zweite Vorspannelement ein zweites elastisches Element umfasst und das zweite elastische Element zwischen der piezoelektrischen Plattenstruktur (111) des zweiten Antriebselements (45) und dem äußeren Rahmenträger angeordnet ist, um den Reibungsantriebsabschnitt (112) des zweiten Antriebselements (45) mittels einer elastischen Kraft des zweiten elastischen Elements dazu zu zwingen, gegen den zweiten Reibungsbetätigungsabschnitt angelegt zu werden, so dass das zweite Antriebselement (45) reibschlüssig mit dem zweiten Rahmenträger (32) gekoppelt ist.

12. Kameramodul nach Anspruch 11, wobei das erste elastische Element und das zweite elastische Element als Klebstoffe mit Elastizität ausgebildet sind, wobei Dickenabmessungen des ersten elastischen Elements und des zweiten elastischen Elements zwischen 10 µm und 50 µm liegen.

13. Kameramodul nach Anspruch 9, wobei die erste Vorspannkomponente (43) ein erstes magnetisches Anziehungselement, das an dem ersten Rahmenträger (31) angeordnet ist, und ein zweites magnetisches Anziehungselement umfasst, das an dem zweiten Rahmenträger (32) angeordnet ist und dem ersten magnetischen Anziehungselement entspricht, um den Reibungsantriebsabschnitt (112) des ersten Antriebselements (42) mittels einer magnetischen Anziehungswirkung zwischen dem ersten magnetischen Anziehungselement und dem zweiten magnetischen Anziehungselement dazu zu zwingen, gegen den ersten Reibungsbetätigungsabschnitt angelegt zu werden, so dass das erste Antriebselement (42) reibschlüssig mit dem ersten Rahmenträger (31) gekoppelt ist; und die zweite Vorspannkomponente ein drittes magnetisches Anziehungselement, das an dem zweiten Rahmenträger (32) angeordnet ist, und ein viertes magnetisches Anziehungselement umfasst, das an dem äußeren Rahmenträger angeordnet ist und dem dritten magnetischen Anziehungselement entspricht, um den Reibungsantriebsabschnitt (112) des zweiten Antriebselements (45) mittels einer magnetischen Anziehungswirkung zwischen dem dritten magnetischen Anziehungselement und dem vierten magnetischen Anziehungselement dazu zu zwingen, gegen den zweiten Reibungsbetätigungsabschnitt angelegt zu werden, so dass das zweite Antriebselement (45) reibschlüssig mit dem zweiten Rahmenträger (32) gekoppelt ist.

14. Kameramodul nach Anspruch 7, wobei der erste Rahmenträger (31) eine erste Nut umfasst, die vertieft auf seiner Oberfläche gebildet ist, und der erste Reibungsbetätigungsabschnitt in der ersten Nut angeordnet ist, wobei die erste Nut eine Führungsnut zum Führen des ersten Antriebselements (42) bildet, wobei der zweite Rahmenträger (32) eine zweite Nut umfasst, die vertieft auf seiner Oberfläche gebildet ist, und der zweite Reibungsbetätigungsabschnitt in der zweiten Nut angeordnet ist, wobei die zweite Nut eine Führungsnut zum Führen des zweiten Antriebselements (45) bildet, wobei die erste Nut eine verringerte Öffnungsgröße aufweist, die entlang der Breitenrichtung (D) des ersten Rahmenträgers (31) in Richtung von dem ersten Antriebselement (42) weg allmählich abnimmt, und/oder die zweite Nut eine verringerte Öffnungsgröße aufweist, die entlang der Breitenrichtung (D) des zweiten Rahmenträgers (32) in Richtung von dem zweiten Antriebselement (45) weg allmählich abnimmt.

15. Kameramodul nach Anspruch 7, wobei die Antriebsanordnung ferner einen ersten Führungsmechanismus, der zwischen dem ersten Rahmenträger (31) und dem zweiten Rahmenträger (32) angeordnet ist, und einen zweiten Führungsmechanismus umfasst, der zwischen dem zweiten Rahmenträger (32) und dem äußeren Rahmenträger angeordnet ist.

## Revendications

1. Un module de caméra, comprenant :
un assemblage photosensible (10), comprenant une carte de circuit imprimé (11) et une puce photosensible (12) électriquement reliée à la carte de circuit imprimé (11) ;
un assemblage de cadre de support (30) monté sur l'assemblage photosensible (10), dans lequel l'assemblage de cadre de support (30) comprend un premier cadre de support (31, 41) ;
une lentille de caméra optique (20) maintenue sur un trajet photosensible de l'assemblage photosensible (10) en étant montée dans le premier cadre de support (31), dans lequel la lentille de caméra optique (20) est pourvue d'un axe optique ; et
un assemblage d'entraînement, **caractérisé en ce qu'**il comprend un premier élément d'entraînement (42) et un premier composant de pré-pressage (43), dans lequel le premier élément d'entraînement (42) est conçu comme un actionneur piézoélectrique, dans lequel le premier élément d'entraînement (42) est couplé par friction au premier cadre de support (31) par l'intermédiaire du premier composant de pré-pressage (43), et est configuré pour, après avoir été entraîné, se déplacer selon une trajectoire bidimensionnelle dans un plan perpendiculaire à l'axe optique d'une manière de vibration de flexion le long de deux directions, et entraîner ainsi le premier cadre de support (31) par friction, de manière à amener la lentille de caméra optique (20) à se déplacer dans une première direction perpendiculaire à l'axe optique ;
dans lequel le système d'actionnement (110) comprend une structure de plaque piézoélectrique (111) et une partie d'entraînement par friction (112) fixée à la structure de plaque piézoélectrique (111) ;
dans lequel la structure de plaque piézoélectrique (111) comprend une première région piézoélectrique (1111), une deuxième région piézoélectrique (1112) et une troisième région piézoélectrique (1113) formées sur la deuxième surface latérale, et une quatrième région piézoélectrique (1114) formée sur la première surface latérale, dans lequel la deuxième région piézoélectrique (1112) est située entre la première région piézoélectrique (1111) et la troisième région piézoélectrique (1113), et la quatrième région piézoélectrique (1114) est adjacente à la deuxième région piézoélectrique (1112) ; et dans lequel la structure de plaque piézoélectrique (111) comprend en outre une première paire d'électrodes (1115) électriquement reliée à la première région piézoélectrique (1111), une deuxième paire d'électrodes (1116) électriquement reliée à la deuxième région piézoélectrique (1112), une troisième paire d'électrodes (1117) électriquement reliée à la troisième région piézoélectrique (1113), et une quatrième paire d'électrodes (1118) électriquement reliée à la quatrième région piézoélectrique (1114).

2. Le module de caméra selon la revendication 1, dans lequel l'assemblage de cadre de support (30) comprend en outre un deuxième cadre de support (32, 44) disposé extérieurement sur le premier cadre de support (31) et un cadre de support externe disposé extérieurement sur le deuxième cadre de support (32), dans lequel l'assemblage d'entraînement comprend en outre un deuxième élément d'entraînement (45) et un deuxième composant de pré-pressage, dans lequel le deuxième élément d'entraînement (45) est couplé par friction au deuxième cadre de support (32) par l'intermédiaire du deuxième composant de pré-pressage, et est configuré pour, après avoir été entraîné, se déplacer selon une trajectoire bidimensionnelle dans un plan perpendiculaire à l'axe optique d'une manière de vibration de flexion le long de deux directions, et entraîner ainsi le deuxième cadre de support (32) par friction, de manière à amener le premier cadre de support (31) à amener la lentille de caméra optique (20) à se déplacer dans une deuxième direction perpendiculaire à l'axe optique, la deuxième direction étant perpendiculaire à la première direction.

3. Le module de caméra selon la revendication 2, dans lequel le premier élément d'entraînement (42) et le deuxième élément d'entraînement (45) sont tous deux conçus comme un actionneur piézoélectrique, respectivement, et l'actionneur piézoélectrique comprend un système d'actionnement et un système de circuit d'entraînement, dans lequel le système d'actionnement se déplace selon une trajectoire bidimensionnelle le long d'une direction prédéfinie d'une manière de vibration de flexion le long de deux directions sous la commande du système de circuit d'entraînement.

4. Le module de caméra selon la revendication 3, dans lequel la partie d'entraînement par friction est couplée par friction au premier cadre de support (31) ou au deuxième cadre de support (32), dans lequel la structure de plaque piézoélectrique (111) a une première surface latérale s'étendant le long de sa direction de profondeur (D) et une deuxième surface latérale s'étendant le long de sa direction de hauteur (H) et adjacente à la première surface latérale, dans lequel la direction de profondeur et la direction de hauteur sont toutes deux perpendiculaires à l'axe optique, et la direction de profondeur est perpendiculaire à la direction de hauteur, dans lequel la structure de plaque piézoélectrique (111) a une première fréquence de résonance le long de sa direction de profondeur et une deuxième fréquence de résonance le long de sa direction de hauteur, et dans lequel la deuxième fréquence de résonance est supérieure à la première fréquence de résonance.

5. Le module de caméra selon la revendication 4, dans lequel le système de circuit d'entraînement (120) comprend un premier circuit d'entraînement (121) et un deuxième circuit d'entraînement (122), le premier circuit d'entraînement (121) est électriquement relié à la première paire d'électrodes (1115) et à la troisième paire d'électrodes (1117), et le deuxième circuit d'entraînement (122) est électriquement relié à la deuxième paire d'électrodes (1116) et à la quatrième paire d'électrodes (1118) ; et dans lequel les fréquences de vibration des signaux de vibration de circuit délivrés par le premier circuit d'entraînement (121) et le deuxième circuit d'entraînement (122) sont égales à la première fréquence de résonance ou à la deuxième fréquence de résonance.

6. Le module de caméra selon la revendication 5, dans lequel lorsque la fréquence de vibration du signal de vibration de circuit délivré par le premier circuit d'entraînement (121) est la première fréquence de résonance, la structure de plaque piézoélectrique (111) entre en résonance dans sa direction de hauteur et entre partiellement en résonance dans sa direction de profondeur, de sorte que la structure de plaque piézoélectrique (111) se déplace selon une trajectoire bidimensionnelle le long d'une direction prédéfinie d'une manière de vibration de flexion le long de deux directions ; et dans lequel lorsque la fréquence de vibration d'un signal de vibration de circuit introduit par le deuxième circuit d'entraînement (122) est la deuxième fréquence de résonance, la structure de plaque piézoélectrique (111) entre en résonance dans sa direction de profondeur et entre partiellement en résonance dans sa direction de hauteur, de sorte que la structure de plaque piézoélectrique (111) se déplace selon une trajectoire bidimensionnelle le long d'une direction prédéfinie d'une manière de vibration de flexion le long de deux directions.

7. Le module de caméra selon la revendication 6, dans lequel l'assemblage d'entraînement comprend en outre une première partie d'actionnement par friction et une deuxième partie d'actionnement par friction, et la première partie d'actionnement par friction est intercalée entre une partie d'entraînement par friction (112) du premier élément d'entraînement (42) et le premier cadre de support (31), de sorte que le premier élément d'entraînement (42) est couplé par friction au premier cadre de support (31) par l'intermédiaire de la première partie d'actionnement par friction et du premier composant de pré-pressage (43) ; et la deuxième partie d'actionnement par friction est intercalée entre une partie d'entraînement par friction (112) du deuxième élément d'entraînement (45) et le deuxième cadre de support (32), de sorte que le deuxième élément d'entraînement (45) est couplé par friction au deuxième cadre de support (32) par l'intermédiaire du deuxième composant de pré-pressage et de la deuxième partie d'actionnement par friction.

8. Le module de caméra selon la revendication 7, dans lequel le premier élément d'entraînement (42) est situé sur une partie latérale du premier cadre de support (31) qui s'étend parallèlement à l'axe optique, ou
le premier élément d'entraînement (42) est situé sur une partie supérieure du premier cadre de support (31) qui est un côté supérieur du premier cadre de support (31) et s'étend perpendiculairement à l'axe optique, ou
le premier élément d'entraînement (42) est situé sur une partie inférieure du premier cadre de support (31) qui est un côté inférieur du premier cadre de support (31) et s'étend perpendiculairement à l'axe optique.

9. Le module de caméra selon la revendication 7, dans lequel le premier élément d'entraînement (42) est situé sur une partie latérale du premier cadre de support (31) qui s'étend parallèlement à l'axe optique, dans lequel le deuxième élément d'entraînement (45) est intercalé entre le deuxième cadre de support (32) et le cadre de support externe par l'intermédiaire du deuxième composant de pré-pressage et de la deuxième partie d'actionnement par friction, de sorte que le deuxième élément d'entraînement (45) est couplé par friction au deuxième cadre de support (32), et dans lequel le deuxième élément d'entraînement (45) est situé sur une partie latérale du deuxième cadre de support (32) qui s'étend parallèlement à l'axe optique.

10. Le module de caméra selon la revendication 7, dans lequel le premier élément d'entraînement (42) est situé sur une partie supérieure du premier cadre de support (31) qui est un côté supérieur du premier cadre de support (31) et s'étend perpendiculairement à l'axe optique, dans lequel le deuxième élément d'entraînement (45) est intercalé entre le deuxième cadre de support (32) et le cadre de support externe par l'intermédiaire du deuxième composant de pré-pressage et de la deuxième partie d'actionnement par friction, de sorte que le deuxième élément d'entraînement (45) est couplé par friction au deuxième cadre de support (32), et dans lequel le deuxième élément d'entraînement (45) est situé sur une partie supérieure du deuxième cadre de support (32) qui est un côté supérieur du deuxième cadre de support (32) et s'étend perpendiculairement à l'axe optique.

11. Le module de caméra selon la revendication 9, dans lequel le premier composant de pré-pressage (43) comprend un premier élément élastique, et le premier élément élastique est agencé entre la structure de plaque piézoélectrique (111) du premier élément d'entraînement (42) et le deuxième cadre de support (32), de manière à forcer la partie d'entraînement par friction (112) du premier élément d'entraînement (42) à venir en butée contre la première partie d'actionnement par friction au moyen d'une force élastique du premier élément élastique, de sorte que le premier élément d'entraînement (42) est couplé par friction au premier cadre de support (31) ; et le deuxième élément de pré-pressage comprend un deuxième élément élastique, et le deuxième élément élastique est agencé entre la structure de plaque piézoélectrique (111) du deuxième élément d'entraînement (45) et le cadre de support externe, de manière à forcer la partie d'entraînement par friction (112) du deuxième élément d'entraînement (45) à venir en butée contre la deuxième partie d'actionnement par friction au moyen d'une force élastique du deuxième élément élastique, de sorte que le deuxième élément d'entraînement (45) est couplé par friction au deuxième cadre de support (32).

12. Le module de caméra selon la revendication 11, dans lequel le premier élément élastique et le deuxième élément élastique sont conçus comme des adhésifs ayant une élasticité, dans lequel les dimensions d'épaisseur du premier élément élastique et du deuxième élément élastique sont comprises entre 10 µm et 50 µm.

13. Le module de caméra selon la revendication 9, dans lequel le premier composant de pré-pressage (43) comprend un premier élément d'attraction magnétique agencé sur le premier cadre de support (31) et un deuxième élément d'attraction magnétique agencé sur le deuxième cadre de support (32) et correspondant au premier élément d'attraction magnétique, de manière à forcer la partie d'entraînement par friction (112) du premier élément d'entraînement (42) à venir en butée contre la première partie d'actionnement par friction au moyen d'un effet d'attraction magnétique entre le premier élément d'attraction magnétique et le deuxième élément d'attraction magnétique, de sorte que le premier élément d'entraînement (42) est couplé par friction au premier cadre de support (31) ; et le deuxième composant de pré-pressage comprend un troisième élément d'attraction magnétique agencé sur le deuxième cadre de support (32) et un quatrième élément d'attraction magnétique agencé sur le cadre de support externe et correspondant au troisième élément d'attraction magnétique, de manière à forcer la partie d'entraînement par friction (112) du deuxième élément d'entraînement (45) à venir en butée contre la deuxième partie d'actionnement par friction au moyen d'un effet d'attraction magnétique entre le troisième élément d'attraction magnétique et le quatrième élément d'attraction magnétique, de sorte que le deuxième élément d'entraînement (45) est couplé par friction au deuxième cadre de support (32).

14. Le module de caméra selon la revendication 7, dans lequel le premier cadre de support (31) comprend une première rainure formée en creux sur sa surface, et la première partie d'actionnement par friction est agencée dans la première rainure, dans lequel la première rainure forme une rainure de guidage pour guider le premier élément d'entraînement (42), dans lequel le deuxième cadre de support (32) comprend une deuxième rainure formée en creux sur sa surface, et la deuxième partie d'actionnement par friction est agencée dans la deuxième rainure, dans lequel la deuxième rainure forme une rainure de guidage pour guider le deuxième élément d'entraînement (45), dans lequel la première rainure a une taille d'ouverture réduite diminuant progressivement le long de la direction de largeur (D) du premier cadre de support (31) vers la direction s'éloignant du premier élément d'entraînement (42), et/ou la deuxième rainure a une taille d'ouverture réduite diminuant progressivement le long de la direction de largeur (D) du deuxième cadre de support (32) vers la direction s'éloignant du deuxième élément d'entraînement (45).

15. Le module de caméra selon la revendication 7, dans lequel l'assemblage d'entraînement comprend en outre un premier mécanisme de guidage agencé entre le premier cadre de support (31) et le deuxième cadre de support (32), et un deuxième mécanisme de guidage agencé entre le deuxième cadre de support (32) et le cadre de support externe.
